# EUROPEAN PATENT APPLICATION

(11) **EP 4 737 235 A1**
(43) Date of publication of application: **06.05.2026**
(21) Application number: 23944730.3
(22) Date of filing: 13.07.2023
(51) Int. Cl.: B60T 13/74

(54) **SIDE-MOUNTED ELECTROMECHANICAL BRAKING DEVICE AND VEHICLE**

(71) Applicant: Huawei Digital Power Technologies Co., Ltd., Shenzhen, Guangdong 518043 (CN)
(72) Inventor: MAO, Yan, Shenzhen, Guangdong 518043 (CN); ZHU, Lingfeng, Shenzhen, Guangdong 518043 (CN); SUN, Yi, Shenzhen, Guangdong 518043 (CN); YAN, Keyu, Shenzhen, Guangdong 518043 (CN)
(74) Representative: Maiwald GmbH
(86) International application number: PCT/CN2023/107209
(87) International publication number: WO 2025/010711

(57) **Abstract**

This application provides a side-mounted electro-mechanical braking apparatus and a vehicle. The electro-mechanical braking system includes a brake motor, a reducer, and a control circuit board. The control circuit board is configured to fasten a control circuit of the brake motor. The control circuit of the brake motor is configured to output an alternating current to drive the brake motor. The brake motor is configured to be in transmission connection to a brake by using the reducer. The brake is configured to brake wheels of the vehicle. The reducer includes an input shaft and an output shaft that are arranged in parallel. The input shaft is configured to be in transmission connection to a motor shaft of the brake motor. The output shaft is configured to drive the brake. In an axial direction of the brake motor, the input shaft is arranged between the motor shaft of the brake motor and the control circuit board, and the input shaft and the output shaft are arranged on a side that is of the control circuit board and that faces the brake motor. A thickness direction of the control circuit board is parallel to an axial direction of the input shaft, and a length direction of the control circuit board is parallel to an arrangement direction of the input shaft and the output shaft. The electro-mechanical braking apparatus in this application is characterized by a small volume and high transmission efficiency.

## Description

### TECHNICAL FIELD

This application relates to the field of vehicle technologies, and specifically, to a side-mounted electro-mechanical braking apparatus and a vehicle.

### BACKGROUND

An electro-mechanical braking apparatus (electro-mechanical brake, EMB) includes a brake motor, a mechanical transmission mechanism, and a brake. The brake motor drives the brake by using the mechanical transmission mechanism, which is characterized by a simple structure, a sensitive response, stable load transmission, and no need to provide a hydraulic pipeline, thereby improving safety, maneuverability, and comfort of a vehicle.

In the existing electro-mechanical braking apparatus, the brake motor, the mechanical transmission mechanism, and the brake are independent components. This results in an excessively large volume of the electro-mechanical braking apparatus, while a wheel of the vehicle has limited space.

### SUMMARY

This application provides a side-mounted electro-mechanical braking apparatus and a vehicle, which is characterized by a small volume and high transmission efficiency.

According to a first aspect, the electro-mechanical braking system provided in this application includes a brake motor, a reducer, and a control circuit board. The control circuit board is configured to fasten a control circuit of the brake motor. The control circuit of the brake motor is configured to output an alternating current to drive the brake motor. The brake motor is configured to be in transmission connection to a brake by using the reducer. The brake is configured to brake wheels of the vehicle. The reducer includes an input shaft and an output shaft that are arranged in parallel. The input shaft is configured to be in transmission connection to a motor shaft of the brake motor. The output shaft is configured to drive the brake. In an axial direction of the brake motor, the input shaft is arranged between the motor shaft of the brake motor and the control circuit board, and the input shaft and the output shaft are arranged on a side that is of the control circuit board and that faces the brake motor. A thickness direction of the control circuit board is parallel to an axial direction of the input shaft, and a length direction of the control circuit board is parallel to an arrangement direction of the input shaft and the output shaft.

The control circuit board side-mounted in the electro-mechanical braking apparatus provided in this application helps the electro-mechanical braking apparatus utilize side space of the wheel of the vehicle, and can further reduce occupied top space of the wheel of the vehicle. In addition, in the electro-mechanical braking apparatus provided in this application, the brake motor, and the input shaft and the output shaft of the reducer are arranged on a same side of the control circuit board. A braking force transmission path through which the brake motor drives the brake by using the reducer is on the same side of the control circuit board. This can reduce a length of the braking force transmission path, thereby providing high transmission efficiency. Moreover, in the electro-mechanical braking apparatus provided in this application, the control circuit board and the brake motor are respectively arranged on two sides of the reducer. This facilitates control of mutual isolation of a circuit component and a mechanical transmission mechanism, thereby improving reliability of the electro-mechanical braking apparatus.

In an implementation, the electro-mechanical braking apparatus includes a position sensor, the position sensor is configured to detect a rotation angle of the brake motor, the position sensor includes a stator and a rotor, the control circuit board is configured to fasten the stator, and the input shaft is configured to be in coaxial transmission connection to the motor shaft of the brake motor and the rotor of the position sensor.

In the electro-mechanical braking apparatus provided in this application, the stator of the position sensor and the control circuit of the brake motor are both fastened to the control circuit board. This facilitates an integrated design of circuit components in the electro-mechanical braking apparatus. In addition, the control circuit board and the brake motor are arranged on two sides of the input shaft of the reducer. This facilitates mounting and maintenance of the position sensor or another circuit component in the control circuit board.

In an implementation, the reducer includes a motor gear and an output wheel, the motor gear is coaxially fastened to the input shaft, the motor gear is in transmission connection to the output wheel, the output wheel is configured to drive the output shaft to rotate, and the motor gear and the output wheel are arranged on a side that is of the control circuit board and that faces the brake motor.

In the electro-mechanical braking apparatus provided in this application, the motor gear and the output wheel that are included in the reducer are arranged on a same side of the control circuit board. This can not only reduce the length of the braking force transmission path, but also help the electro-mechanical braking apparatus utilize side space of the wheel of the vehicle, thereby reducing occupied radial top space of the wheel of the vehicle.

In an implementation, the reducer includes a planetary input wheel, a planetary gear train, and a planetary output wheel, the motor gear is configured to be in transmission connection to the planetary input wheel, the planetary input wheel is in transmission connection to the planetary output wheel through the planetary gear train, and the planetary output wheel is used as the output wheel of the reducer to drive the output shaft to rotate, or is configured to drive the output shaft to rotate. The motor gear and the planetary input wheel are spaced apart in the arrangement direction of the input shaft and the output shaft, and the planetary gear train is arranged between the planetary input wheel and the planetary output wheel in an axial direction of the output shaft.

In the electro-mechanical braking apparatus provided in this application, the reducer can not only implement a large rotation speed ratio change in small space by using the planetary gear train, but also enable the electro-mechanical braking apparatus to more fully utilize side space of the wheel of the vehicle by arranging the planetary gear train between the planetary input wheel and the planetary output wheel, thereby reducing occupied radial top space of the wheel of the vehicle.

In an implementation, the electro-mechanical braking apparatus includes a housing. The housing is configured to accommodate a gear set of the reducer and the control circuit board. The housing includes a reducer accommodating cavity and a control circuit accommodating cavity. The housing includes a separator plate and a cover plate. The control circuit board is arranged between the separator plate and the cover plate in the axial direction of the brake motor. The separator plate is configured to separate the reducer accommodating cavity from the control circuit accommodating cavity. The reducer accommodating cavity is provided to accommodate the gear set of the reducer. The control circuit accommodating cavity is provided to accommodate the control circuit board.

In the electro-mechanical braking apparatus provided in this application, the reducer accommodating cavity and the control circuit accommodating cavity are arranged in a side-mounted manner. This not only reduces a volume of the electro-mechanical braking apparatus, but also facilitates an integrated design of the housing in the electro-mechanical braking apparatus. In addition, in the electro-mechanical braking apparatus provided in this application, the reducer accommodating cavity and the control circuit accommodating cavity are formed through separation by the separator plate. This can not only prevent lubricating oil in the reducer from affecting a circuit component, but also facilitate separate assembly and maintenance of the reducer and the control circuit board.

In an implementation, at least one of the separator plate or the cover plate is configured to fasten the control circuit board, and the input shaft is configured to penetrate the separator plate and be in transmission connection to the rotor of the position sensor and the motor shaft of the brake motor.

In the electro-mechanical braking apparatus provided in this application, the side-mounted control circuit board may be fastened by using at least one of the separator plate or the cover plate. This facilitates structural stability of the control circuit board, thereby improving electrical reliability of the electro-mechanical braking apparatus. In addition, in the electro-mechanical braking apparatus provided in this application, the control circuit board is vertically arranged with the output shaft and the input shaft of the reducer, so that the electro-mechanical braking apparatus can more fully utilize side space of the wheel of the vehicle, thereby reducing occupied radial top space of the wheel of the vehicle.

In an implementation, the motor shaft of the brake motor and the input shaft of the reducer are of an integrated structure, and the brake motor includes a proximal shaft bearing and a distal shaft bearing. In the axial direction of the brake motor, the proximal shaft bearing and the distal shaft bearing are arranged on two sides of a motor rotor of the brake motor, and the distal shaft bearing and the control circuit board are arranged on two sides of the proximal shaft bearing.

In the electro-mechanical braking apparatus provided in this application, the motor shaft of the brake motor and the input shaft of the reducer are of an integrated structure, so that not only a connection structure design of the motor shaft and the input shaft can be omitted, but also the input shaft and the motor shaft can share a same distal shaft bearing. This reduces a shaft bearing structure of the input shaft in the reducer, thereby improving an integration level of the electro-mechanical braking apparatus and reducing occupied side space of the wheel of the vehicle.

In an implementation, the electro-mechanical braking apparatus includes the brake. The brake includes a reversing mechanism and at least one friction lining. The reversing mechanism is configured to rotate with the output shaft and drive the friction lining to move in the axial direction of the output shaft. The friction lining is configured to brake the wheels of the vehicle. The reversing mechanism and the motor shaft of the brake motor are arranged in parallel in the arrangement direction of the input shaft and the output shaft. The reversing mechanism and the at least one friction lining are arranged on a side that is of the control circuit board and that faces the brake motor.

In the electro-mechanical braking apparatus provided in this application, the brake and the brake motor are side-mounted on a same side of the control circuit board, and a mechanical transmission mechanism is arranged in a gap between the wheel of the vehicle and the control circuit board, thereby improving an integration level of the electro-mechanical braking apparatus and reducing occupied side space of the wheel of the vehicle. In addition, in the electro-mechanical braking apparatus provided in this application, the reversing mechanism of the brake and the motor shaft of the brake motor are arranged in parallel, so that occupied top space of the wheel of the vehicle can be reduced.

In an implementation, the reversing mechanism includes a leadscrew and a ballscrew jacket, and the leadscrew and the motor shaft of the brake motor are arranged in parallel in the arrangement direction of the input shaft and the output shaft. The leadscrew is configured to be in transmission connection to the output shaft and drive the ballscrew jacket to move in an axial direction of the leadscrew. The ballscrew jacket is configured to drive the at least one friction lining to move in the axial direction of the leadscrew.

In the electro-mechanical braking apparatus provided in this application, the leadscrew and the motor shaft of the brake motor are arranged in parallel, so that occupied top space of the wheel of the vehicle can be reduced.

In an implementation, the electro-mechanical braking apparatus includes a lock actuator, the lock actuator is configured to lock or release a rotation action of the output wheel, the lock actuator includes a clutch and a lock motor, the lock motor is configured to control the clutch to perform locking or releasing, the control circuit board is configured to fasten a control circuit of the lock motor, and the control circuit of the lock motor is configured to output an alternating current to drive the lock motor. The lock motor is arranged between the control circuit board and the output wheel in an axial direction of the lock motor.

In the electro-mechanical braking apparatus provided in this application, the lock motor is arranged in a gap between the output wheel and the control circuit board, so that occupied side space of the wheel of the vehicle can be reduced.

In an implementation, the lock actuator includes an axial moving member, and the lock motor is configured to drive the axial moving member to move away from or move toward the clutch to control the clutch to perform locking or releasing.

In an implementation, the clutch is configured to lock or release a rotation action of the planetary input wheel, the clutch is accommodated in a shaft hole of a gear shaft of the planetary input wheel, and the clutch includes an inner gear and a movable member. The inner gear is coaxially fastened to the shaft hole of the gear shaft of the planetary input wheel, a groove is provided on an outer circumferential surface of the inner gear, an opening of the groove faces an inner circumferential surface of the shaft hole of the gear shaft of the planetary input wheel, and a groove depth of the groove gradually decreases in a circumferential direction of the shaft hole of the gear shaft of the planetary input wheel. The movable member is configured to move in the groove in the circumferential direction of the shaft hole of the gear shaft of the planetary input wheel.

In the electro-mechanical braking apparatus provided in this application, the clutch is arranged in the shaft hole of the gear shaft of the planetary input wheel, so that occupied side space of the wheel of the vehicle can be reduced.

In an implementation, the inner gear includes at least two grooves, a quantity of the movable members is the same as a quantity of the grooves, and each groove is provided to accommodate one movable member. The at least two grooves are provided at equal spacings in a circumferential direction of the inner gear, and a minimum groove depth end of one of two adjacent grooves is close to a maximum groove depth end of the other groove in the circumferential direction of the inner gear.

In an implementation, the clutch includes an elastic member, and the elastic member is configured to cooperate with the axial moving member to drive the movable member to move back and forth in a circumferential direction of the inner gear. The axial moving member moves toward the clutch and drives the movable member to move clockwise in the circumferential direction of the inner gear, and when the axial moving member moves away from the clutch, the elastic member is configured to drive the movable member to move counterclockwise in the circumferential direction of the inner gear. The axial moving member moves toward the clutch and drives the movable member to move counterclockwise in the circumferential direction of the inner gear, and when the axial moving member moves away from the clutch, the elastic member is configured to drive the movable member to move clockwise in the circumferential direction of the inner gear.

According to a second aspect, this application provides a vehicle, including wheels and the electro-mechanical braking apparatus provided in any one of the foregoing implementations. The electro-mechanical braking apparatus is configured to brake the wheels. An axial direction of the brake motor, an axial direction of the input shaft, and an axial direction of the output shaft are parallel to axial directions of the wheels, and an arrangement direction of the input shaft and the output shaft is perpendicular to the axial directions of the wheels.

The vehicle provided in the second aspect of this application is braked by using the electro-mechanical braking apparatus provided in the first aspect of this application. The electro-mechanical braking apparatus provided in the first aspect of this application has a small volume and high transmission efficiency, thereby saving internal space of the vehicle in this application, and improving reliability of the vehicle.

### BRIEF DESCRIPTION OF DRAWINGS

FIG. 1 is a diagram of a vehicle according to an embodiment of this application;
FIG. 2 is a diagram of an electro-mechanical braking apparatus according to an embodiment of this application;
FIG. 3 is a diagram of a brake according to an embodiment of this application;
FIG. 4 is a cross-sectional diagram of the brake shown in FIG. 3 according to this application;
FIG. 5 is a diagram of a brake motor of an electro-mechanical braking apparatus according to an embodiment of this application;
FIG. 6 is an exploded diagram of the brake motor shown in FIG. 5 according to this application;
FIG. 7 is a cross-sectional diagram of a brake motor of an electro-mechanical braking apparatus according to an embodiment of this application;
FIG. 8 is another cross-sectional diagram of a brake motor of an electro-mechanical braking apparatus according to an embodiment of this application;
FIG. 9 is an exploded diagram of an electro-mechanical braking apparatus according to an embodiment of this application;
FIG. 10 is another exploded diagram of the electro-mechanical braking apparatus shown in FIG. 9 according to this application;
FIG. 11 is a diagram of one side of an exploded structure of a housing and a circuit board of an electro-mechanical braking apparatus according to an embodiment of this application;
FIG. 12 is a diagram of one side of a structure of the electro-mechanical braking apparatus with a part of the structure omitted according to the embodiment shown in FIG. 11 of this application;
FIG. 13 is a diagram of one side of a cross-sectional structure of the electro-mechanical braking apparatus at a position A-A according to the embodiment shown in FIG. 12 of this application;
FIG. 14 is a diagram of one side of a structure of an electro-mechanical braking apparatus with a part of the structure omitted according to an embodiment of this application;
FIG. 15 is a diagram of one side of a structure of an electro-mechanical braking apparatus with a part of the structure omitted according to an embodiment of this application;
FIG. 16 is a diagram of one side of a cross-sectional structure of the electro-mechanical braking apparatus according to the embodiment shown in FIG. 14 of this application;
FIG. 17 is a diagram of one side of an exploded structure of the electro-mechanical braking apparatus according to the embodiment shown in FIG. 14 of this application;
FIG. 18 is a diagram of one side of a cross-sectional structure of an electro-mechanical braking apparatus with a part of the structure omitted according to an embodiment of this application;
FIG. 19 is an enlarged diagram of one side of a partial structure of the electro-mechanical braking apparatus at a position B according to the embodiment shown in FIG. 18 of this application;
FIG. 20 is a diagram of one side of a cross-sectional structure of a brake motor of an electro-mechanical braking apparatus according to an embodiment of this application;
FIG. 21 is a diagram of one side of a partial structure of a brake motor of an electro-mechanical braking apparatus according to an embodiment of this application;
FIG. 22 is a diagram of one side of a planar structure of an electro-mechanical braking apparatus according to an embodiment of this application;
FIG. 23 is a diagram of one side of a shape structure of a reducer of an electro-mechanical braking apparatus according to an embodiment of this application;
FIG. 24 is a diagram of one side of a shape structure of an electro-mechanical braking apparatus with a part of the structure omitted according to an embodiment of this application;
FIG. 25 is a diagram of another side of a structure of the electro-mechanical braking apparatus with a part of the structure omitted according to the embodiment shown in FIG. 24 of this application;
FIG. 26 is a diagram of one side of a shape structure of an electro-mechanical braking apparatus with a part of the structure omitted according to an embodiment of this application;
FIG. 27 is a diagram of another side of a shape structure of the electro-mechanical braking apparatus with a part of the structure omitted according to the embodiment shown in FIG. 26 of this application;
FIG. 28 is a diagram of one side of a shape structure of the electro-mechanical braking apparatus with a part of the structure omitted according to the embodiment shown in FIG. 26 of this application;
FIG. 29 is a diagram of one side of an exploded structure of the electro-mechanical braking apparatus with a part of the structure omitted according to the embodiment shown in FIG. 28 of this application;
FIG. 30 is a diagram of one side of a shape structure of a clutch 71 of the electro-mechanical braking apparatus with a part of the structure omitted according to the embodiment shown in FIG. 29 of this application;
FIG. 31 is a diagram of one side of a cross-sectional structure of the electro-mechanical braking apparatus with a part of the structure omitted according to the embodiment shown in FIG. 28 of this application;
FIG. 32 is a diagram of one side of a cross-sectional structure of a clutch of the electro-mechanical braking apparatus with a part of the structure omitted according to the embodiment shown in FIG. 31 of this application;
FIG. 33 is a diagram of one side of a partial cross-sectional structure of a lock actuator of the electro-mechanical braking apparatus with a part of the structure omitted according to the embodiment shown in FIG. 31 of this application;
FIG. 34 is a diagram of one side of an exploded structure of a lock actuator of the electro-mechanical braking apparatus with a part of the structure omitted according to the embodiment shown in FIG. 29 of this application;
FIG. 35 is a diagram of one side of a shape structure of an electro-mechanical braking apparatus with a part of the structure omitted according to an embodiment of this application;
FIG. 36 is a diagram of another side of a shape structure of the electro-mechanical braking apparatus with a part of the structure omitted according to the embodiment shown in FIG. 35 of this application;
FIG. 37 is a diagram of still another side of a shape structure of the electro-mechanical braking apparatus with a part of the structure omitted according to the embodiment shown in FIG. 35;
FIG. 38 is a diagram of one side of a cross-sectional structure of the electro-mechanical braking apparatus with a part of the structure omitted according to the embodiment shown in FIG. 35 of this application; and
FIG. 39 is a diagram of one side of a cross-sectional structure of an electro-mechanical braking apparatus with a part of the structure omitted according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

In this specification, sequence numbers, such as "first" and "second", for components are merely intended to distinguish between described objects, and do not have any sequential or technical meaning. Unless otherwise specified, the "connection" in this application includes direct connection and indirect connection. In descriptions of this application, it is to be understood that orientation or position relationships indicated by the terms "above", "below", "front", "back", "top", "bottom", "inside", "outside", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely means that a horizontal height of the first feature is greater than that of the second feature. That the first feature is "below" or "under" the second feature may be that the first feature is right below or obliquely below the second feature, or merely means that a horizontal height of the first feature is less than that of the second feature.

This application provides a vehicle, including wheels and an electro-mechanical braking apparatus. The electro-mechanical braking apparatus is configured to brake the wheels. The electro-mechanical braking apparatus has a small volume and high transmission efficiency, thereby saving internal space of the vehicle in this application, and improving reliability of the vehicle.

The side-mounted electro-mechanical braking system provided in this application includes a brake motor, a reducer, and a control circuit board. The control circuit board is configured to fasten a control circuit of the brake motor. The control circuit of the brake motor is configured to output an alternating current to drive the brake motor. The brake motor is configured to be in transmission connection to a brake by using the reducer. The brake is configured to brake wheels of the vehicle. The reducer includes an input shaft and an output shaft that are arranged in parallel. The input shaft is configured to be in transmission connection to a motor shaft. The output shaft is configured to drive the brake. In an axial direction of the brake motor, the input shaft is arranged between the motor shaft and the control circuit board, and the input shaft and the output shaft are arranged on a side that is of the control circuit board and that faces the brake motor. A thickness direction of the control circuit board is parallel to an axial direction of the input shaft, and a length direction of the control circuit board is parallel to an arrangement direction of the input shaft and the output shaft.

The control circuit board side-mounted in the electro-mechanical braking apparatus provided in this application helps the electro-mechanical braking apparatus utilize side space of the wheel of the vehicle, and can further reduce occupied top space of the wheel of the vehicle. In addition, in the electro-mechanical braking apparatus provided in this application, the brake motor, and the input shaft and the output shaft of the reducer are arranged on a same side of the control circuit board. A braking force transmission path through which the brake motor drives the brake by using the reducer is on the same side of the control circuit board. This can reduce a length of the braking force transmission path, thereby providing high transmission efficiency. Moreover, in the electro-mechanical braking apparatus provided in this application, the control circuit board and the brake motor are respectively arranged on two sides of the reducer. This facilitates control of mutual isolation of a circuit component and a mechanical transmission mechanism, thereby improving reliability of the electro-mechanical braking apparatus.

This application provides a vehicle, including wheels and the electro-mechanical braking apparatus provided in any one of the foregoing implementations. The electro-mechanical braking apparatus is configured to brake the wheels. An axial direction of the brake motor, an axial direction of the input shaft, and an axial direction of the output shaft are parallel to axial directions of the wheels, and an arrangement direction of the input shaft and the output shaft is perpendicular to the axial directions of the wheels.

The vehicle provided in this application is braked by the electro-mechanical braking apparatus provided in this application, thereby saving internal space of the vehicle in this application, and improving reliability of the vehicle.

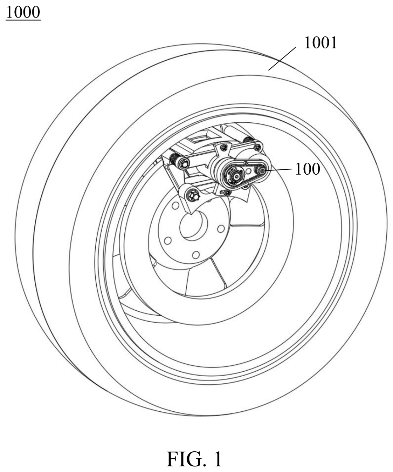

FIG. 1 is a diagram of a vehicle 1000 according to an embodiment of this application. As shown in FIG. 1, the vehicle 1000 provided in this embodiment of this application includes a wheel 1001 and an electro-mechanical braking apparatus 100. The electro-mechanical braking apparatus 100 is configured to brake the wheel 1001. The wheel 1001 is configured to implement a function of the vehicle 1000 traveling on the ground. The electro-mechanical braking apparatus 100 is configured to brake the wheel 1001, to control and adjust a rotation speed of the wheel 1001, to further control traveling status of the vehicle 1000.

It needs to be noted that, in the embodiment shown in FIG. 1, only one wheel 1001 and one electro-mechanical braking apparatus 100 are used as an example for description. In an actual application scenario, the electro-mechanical braking apparatus 100 may be correspondingly disposed on each wheel 1001 in the vehicle 1000.

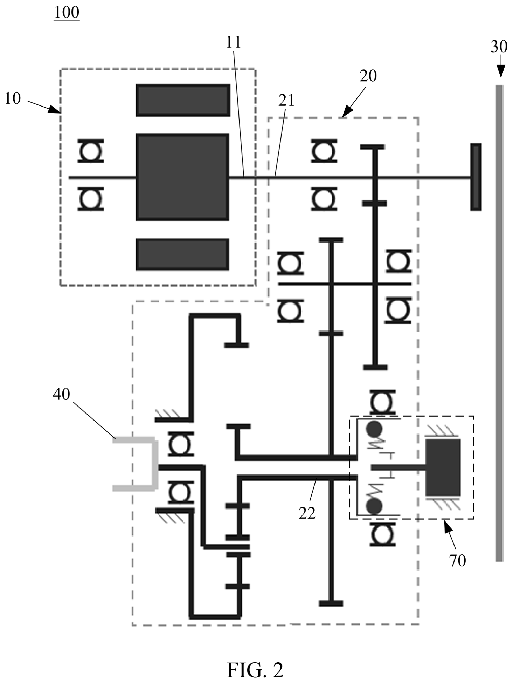

FIG. 2 is a diagram of the electro-mechanical braking apparatus 100 according to an embodiment of this application. To clearly illustrate an internal functional structure of the electro-mechanical braking apparatus 100, a housing of the electro-mechanical braking apparatus 100 is omitted in FIG. 1.

As shown in FIG. 2, the electro-mechanical braking apparatus 100 in this application includes a brake motor 10, a reducer 20, and a control circuit board 30. In an embodiment, the electro-mechanical braking apparatus 100 in this application includes a brake motor 10, a reducer 20, a control circuit board 30, and a brake 40.

In embodiments of this application, the control circuit board 30 is configured to fasten a control circuit of the brake motor 10. The control circuit of the brake motor 10 is configured to output an alternating current to drive the brake motor 10. The brake motor 10 is configured to be in transmission connection to the brake 40 by using the reducer 20. The brake 40 is configured to brake the wheel 1001 of the vehicle 1000.

In embodiments of this application, the reducer 20 includes an input shaft 21 and an output shaft 22 that are arranged in parallel. The input shaft 21 is configured to be in transmission connection to a motor shaft 11 of the brake motor 10. The output shaft 22 is configured to drive the brake 40. In an axial direction of the brake motor 10, the input shaft 21 is arranged between the motor shaft 11 of the brake motor 10 and the control circuit board 30, and the input shaft 21 and the output shaft 22 are arranged on a side that is of the control circuit board 30 and that faces the brake motor 10.

In an embodiment, in an axial direction of the input shaft 21, the brake motor 10 and the reducer 20 are adjacently arranged, and the motor shaft 11 of the brake motor 10 and the input shaft 21 of the reducer 20 perform coaxial transmission.

In embodiments of this application, a thickness direction of the control circuit board 30 is parallel to an axial direction of the input shaft 21, and a length direction of the control circuit board 30 is parallel to an arrangement direction of the input shaft 21 and the output shaft 22. As several electronic components are usually integrated on the control circuit board 30, the thickness direction of the control circuit board 30 may be understood as a direction perpendicular to a plane of the control circuit board 30 of a plate structure. The length direction of the control circuit board 30 may be understood as a direction along the plane of the control circuit board 30. The thickness direction of the control circuit board 30 is set to be parallel to the axial direction of the input shaft 21 of the reducer 20, and the length direction of the control circuit board 30 is set to be parallel to the arrangement direction of the input shaft 21 and the output shaft 22 of the reducer 20, so that space occupied by the control circuit board 30 can be reduced.

In embodiments of this application, the input shaft 21 and the output shaft 22 in the reducer 20 are in transmission connection. For example, in FIG. 1, there is a belt drive between the input shaft 21 and the output shaft 22 of the reducer 20, and in FIG. 2, there is a gear drive between the input shaft 21 and the output shaft 22 of the reducer 20. For example, the transmission connection between the input shaft 21 and the output shaft 22 may alternatively be a chain drive. In a subsequent embodiment of this application, an example in which there is a gear drive between the input shaft 21 and the output shaft 22 of the reducer 20 is used for description.

As shown in FIG. 1 and FIG. 2, an axial direction of the brake motor 10, an axial direction of the input shaft 21, and an axial direction of the output shaft 22 are parallel to an axial direction of the wheel 1001, and an arrangement direction of the input shaft 21 and the output shaft 22 is perpendicular to the axial direction of the wheel 1001.

As shown in FIG. 2, one end of the motor shaft 11 of the brake motor 10 extends toward the reducer 20 and is in transmission connection to the input shaft 21 of the reducer 20. The motor shaft 11 of the brake motor 10 rotates to drive the input shaft 21 to rotate synchronously, so that the brake motor 10 can input power to the reducer 20 by using the input shaft 21, that is, the input shaft 21 is a power input shaft of the reducer 20.

In the axial direction of the output shaft 22, the brake 40 and the reducer 20 are adjacently arranged. In addition, in the arrangement direction of the input shaft 21 and the output shaft 22, the brake motor 10 and a reversing mechanism 41 of the brake 40 are adjacently arranged, that is, in a direction perpendicular to the axial direction of the input shaft 21, the brake 40 and the brake motor 10 are located on a same side of the reducer 20.

One end that is of the output shaft 22 of the reducer 20 and that faces the brake 40 extends out of the reducer 20, and is in transmission connection to the brake 40, to transmit, to the brake 40, power inputted from the input shaft 21 to the reducer 20. This can achieve effect of driving the brake 40 to brake the vehicle 1000, that is, the output shaft 22 is a power output shaft of the reducer 20.

In the axial direction of the input shaft 21, the brake motor 10 and the control circuit board 30 are arranged oppositely. The control circuit board 30 is configured to output an alternating current to control the brake motor 10, and is configured to drive the motor shaft 11 of the brake motor 10 to rotate. This can achieve effect of transmitting a signal by the control circuit board 30 to the brake motor 10 to control working status of the brake motor 10, so that the brake motor 10 can drive the brake 40 to brake the vehicle 1000.

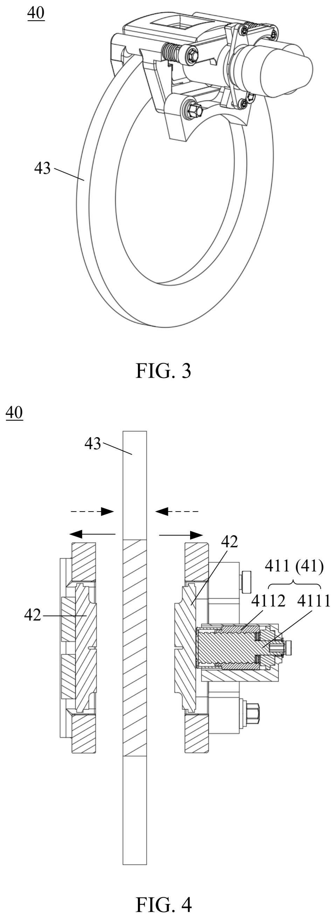

To facilitate an understanding of a process in which the electro-mechanical braking apparatus 100 in this application brakes the vehicle 1000, embodiments of this application first describe the brake 40. Refer to FIG. 3 and FIG. 4 together. FIG. 3 is a diagram of one side of a shape structure of the brake 40 according to an embodiment of this application. FIG. 4 is a diagram of one side of a cross-sectional structure of the brake 40 according to the embodiment shown in FIG. 3 of this application.

In embodiments of this application, the electro-mechanical braking apparatus includes the brake 40. The brake 40 includes a reversing mechanism 41 and at least one friction lining 42. The reversing mechanism 41 is configured to rotate with the output shaft 22 and drive the friction lining 42 to move in the axial direction of the output shaft 22. The friction lining 42 is configured to brake the wheels of the vehicle 1000. In the arrangement direction of the input shaft 21 and the output shaft 22, the reversing mechanism 41 and the motor shaft 11 of the brake motor 10 are arranged in parallel, and the reversing mechanism 41 and the at least one friction lining 42 are arranged on a side that is of the control circuit board 30 and that faces the brake motor 10.

In the electro-mechanical braking apparatus 100 provided in this application, the brake 40 and the brake motor 10 are side-mounted on a same side of the control circuit board 30, and a mechanical transmission mechanism is arranged in a gap between the wheel of the vehicle 1000 and the control circuit board 30, thereby improving an integration level of the electro-mechanical braking apparatus 100 and reducing occupied side space of the wheel of the vehicle 1000. In addition, in the electro-mechanical braking apparatus 100 provided in this application, the reversing mechanism 41 of the brake 40 and the motor shaft 11 of the brake motor 10 are arranged in parallel, so that occupied top space of the wheel of the vehicle 1000 can be reduced.

The input shaft 21 of the reducer 20 is in transmission connection to the reversing mechanism 41 of the brake 40 by using the output shaft 22 of the reducer 20, and the reversing mechanism 41 rotates with the output shaft 22 of the reducer 20 to drive the friction lining 42 of the brake 40 to move in a rotation axis direction of the reversing mechanism 41. The friction lining 42 is configured to cooperate with a brake disc 43 to brake the wheel 1001 of the vehicle 1000. The brake disc 43 is in fixed connection to the wheel 1001 of the vehicle 1000 and rotates synchronously with the wheel 1001. In other words, in a traveling process of the vehicle 1000, the brake disc 43 may rotate with the wheel 1001.

For example, there are two friction linings 42. The two friction linings 42 are arranged on two opposite sides of the brake disc 43 in a thickness direction of the brake disc 43, and the friction linings 42 are in transmission connection to the reducer 20. Specifically, a frame body of the brake 40 is in fixed connection to a frame of the vehicle 1000, the two friction linings 42 are slidably connected to the frame body of the brake 40, and the two friction linings 42 may slide relative to and close to the brake disc 43 or may slide away from the brake disc 43, when driven by the brake motor 10 and the reducer 20 in cooperation.

When the brake motor 10 drives the brake 40 by using the reducer 20 to brake the vehicle 1000, the reducer 20 drives the two friction linings 42 of the brake 40 to move to be close to each other (as shown by dashed arrows in the figure), and the two friction linings 42 may be respectively in contact with two opposite end surfaces of the brake disc 43 to generate a friction force, to reduce a rotation speed of the brake disc 43. As the brake disc 43 rotates synchronously with the wheel 1001, a decrease of the rotation speed of the brake disc 43 synchronously causes a decrease of a rotation speed of the wheel 1001, to achieve effect of braking the wheel 1001, thereby implementing a function of the electro-mechanical braking apparatus 100 braking the vehicle 1000.

In other words, when the brake motor 10 is started, the brake motor 10 achieves effect of power transfer by using the reducer 20, that is, the brake motor 10 inputs power from the input shaft 21 of the reducer 20 to the reducer 20, and outputs the power from the output shaft 22 of the reducer 20 to the brake 40, to drive the brake 40 to brake the vehicle 1000.

In this specification of this application, the foregoing process of braking the vehicle 1000 is defined as that the electro-mechanical braking apparatus 100 in this application works in a service brake mode. In other words, that the electro-mechanical braking apparatus 100 works in the service brake mode may be understood as that when the vehicle 1000 is in a traveling state, the brake motor 10 works and drives the brake 40 by using the reducer 20 to brake the vehicle 1000, so that the vehicle 1000 has a traveling speed reduced or stops traveling.

In embodiments of this application, the reversing mechanism 41 includes a ball screw 411. The ball screw 411 includes a leadscrew 4111 and a ballscrew jacket 4112. The leadscrew 4111 is arranged in parallel with the motor shaft 11 of the brake motor 10 in the arrangement direction of the input shaft 21 and the output shaft 22. The leadscrew 4111 is configured to be in transmission connection to the output shaft 22 and drive the ballscrew jacket 4112 to move in an axial direction of the leadscrew 4111. The ballscrew jacket 4112 is configured to drive the at least one friction lining 42 to move in the axial direction of the leadscrew 4111. In the electro-mechanical braking apparatus 100 provided in this application, the leadscrew 4111 and the motor shaft 11 of the brake motor 10 are arranged in parallel, so that occupied top space of the wheel of the vehicle 1000 can be reduced.

An axial direction of the reversing mechanism 41 may be understood as a rotation axis (that is, a length) direction of the leadscrew 4111, that is, the length direction of the leadscrew 4111 is parallel to an axial direction of the brake disc 43. As the leadscrew 4111 is engaged with the ballscrew jacket 4112 for transmission, when the leadscrew 4111 is driven to rotate around the rotation axis of the leadscrew 4111, a rotation action of the leadscrew 4111 is transferred to the ballscrew jacket 4112, so that the ballscrew jacket 4112 can be driven to generate an action of moving in the length direction of the leadscrew 4111.

The ballscrew jacket 4112 moves toward the brake disc 43 in the axial direction of the brake disc 43, and drives the friction lining 42 in the axial direction of the brake disc 43 to move toward the brake disc 43, so that the friction lining 42 can be in contact with the end surface of the brake disc 43 to generate a friction force, thereby achieving effect of braking the brake disc 43.

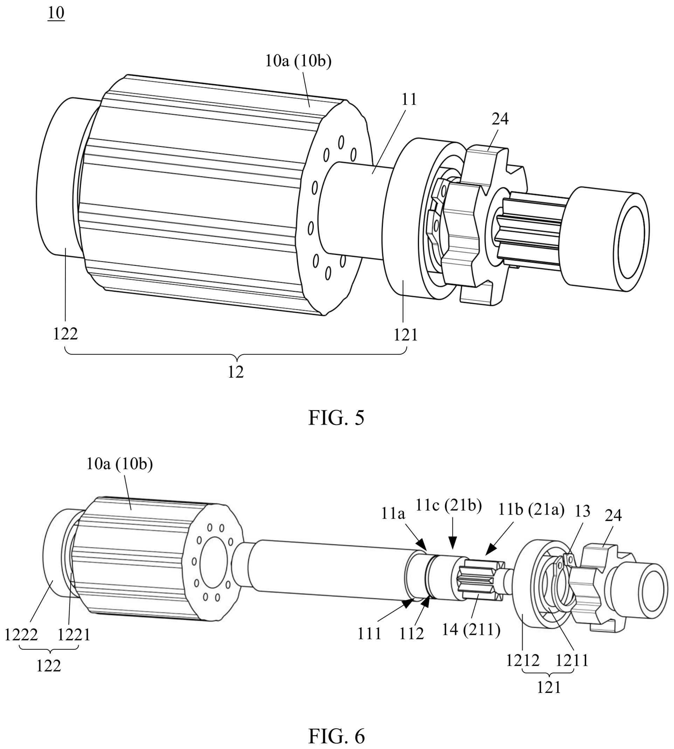

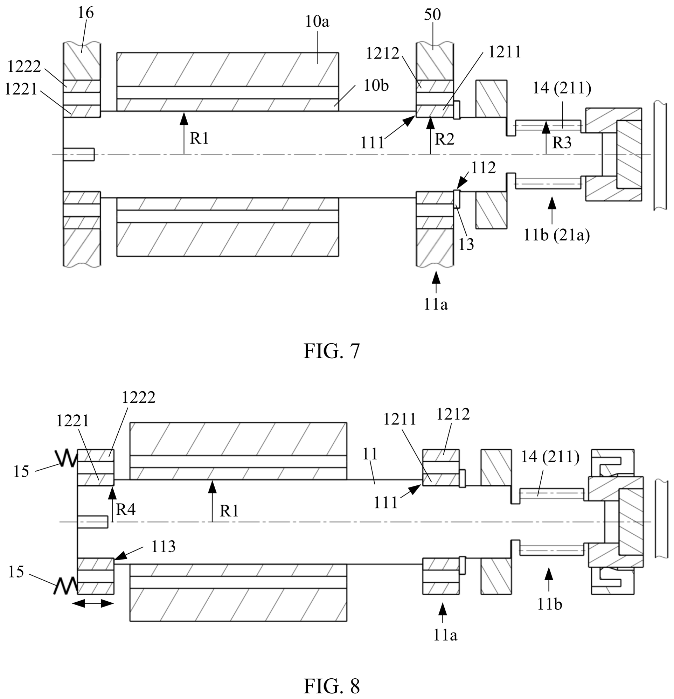

Refer to FIG. 5 to FIG. 7 together with FIG. 2. FIG. 5 is a diagram of one side of a shape structure of the brake motor 10 of the electro-mechanical braking apparatus 100 according to an embodiment of this application. FIG. 6 is a diagram of one side of an exploded structure of the brake motor 10 of the electro-mechanical braking apparatus 100 according to the embodiment shown in FIG. 5 of this application. FIG. 7 is a diagram of one side of a cross-sectional structure of the brake motor 10 of the electro-mechanical braking apparatus 100 according to an embodiment of this application.

As shown in FIG. 5 to FIG. 7, the brake motor 10 includes a motor stator 10a and a motor rotor 10b, and the motor rotor 10b is coaxially fastened to the motor shaft 11 of the brake motor 10. In a radial direction of the motor shaft 11 of the brake motor 10, the motor stator 10a is sleeved on a periphery of the motor rotor 10b, and is fastened to an outer shell 16 of the brake motor 10. By applying an excitation current (an alternating current) to the brake motor 10, an alternating magnetic field can be generated between the motor stator 10a and the motor rotor 10b to drive the motor rotor 10b to drive the motor shaft 11 of the brake motor 10 to rotate around an axis of the motor shaft 11.

For example, the brake motor 10 includes two shaft bearings 12. The two shaft bearings 12 are spaced apart in an axial direction of the motor shaft 11 of the brake motor 10, and both the two shaft bearings 12 are sleeved on the motor shaft 11 of the brake motor 10, to ensure that the motor shaft 11 of the brake motor 10 rotates around the axis of the motor shaft 11 while achieving effect of supporting the motor shaft 11 of the brake motor 10.

As shown in FIG. 5 to FIG. 7, the two shaft bearings 12 include a proximal shaft bearing 121 and a distal shaft bearing 122. In the axial direction of the brake motor 10, the proximal shaft bearing 121 and the distal shaft bearing 122 are arranged on two sides of a motor rotor 10b of the brake motor 10, and the distal shaft bearing 122 and the control circuit board 30 are arranged on two sides of the proximal shaft bearing 121.

Specifically, in an axial direction of the motor rotor 10b, two opposite ends of the motor shaft 11 of the brake motor 10 extend out of the motor rotor 10b. The proximal shaft bearing 121 and the distal shaft bearing 122 are spaced apart on the two opposite sides of the motor rotor 10b in the axial direction of the motor shaft 11 of the brake motor 10, and the proximal shaft bearing 121 is closer to the reducer 20 than the distal shaft bearing 122.

An inner ring 1221 of the distal shaft bearing 122 is sleeved on an end that is of the motor shaft 11 of the brake motor 10 and that is away from the reducer 20. An outer ring 1222 of the distal shaft bearing 122 supports the outer shell 16 of the brake motor 10.

In other words, as shown in FIG. 6 and FIG. 7, the distal shaft bearing 122 is disposed on a side that is of the motor rotor 10b and that is away from the reducer 20, the outer ring 1222 of the distal shaft bearing 122 is fastened to the outer shell 16 of the brake motor 10, and the inner ring 1221 of the distal shaft bearing 122 is sleeved on the motor shaft 11 of the brake motor 10 and is fastened relative to the motor shaft 11 of the brake motor 10.

As the inner ring 1221 of the distal shaft bearing 122 may rotate relative to the outer ring 1222 of the distal shaft bearing 122, the distal shaft bearing 122 can further enable the motor shaft 11 of the brake motor 10 to rotate around the axis of the motor shaft 11 while ensuring that a relative position distance between the motor shaft 11 of the brake motor 10 and the outer shell 16 of the brake motor 10 is fixed.

An inner ring 1211 of the proximal shaft bearing 121 is sleeved on a middle section 11a of the motor shaft 11 of the brake motor 10. An outer ring 1212 of the proximal shaft bearing 121 supports a housing 50 of the electro-mechanical braking apparatus 100 in this application. In the axial direction of the motor shaft 11 of the brake motor 10, the middle section 11a of the motor shaft 11 is located between the two opposite ends of the motor shaft 11 of the brake motor 10, and is located on a side that is of the motor rotor 10b and that faces away from the distal shaft bearing 122.

As shown in FIG. 6 and FIG. 7, the proximal shaft bearing 121 is disposed between the two opposite ends of the motor shaft 11 of the brake motor 10 in the axial direction of the motor shaft 11, and the outer ring 1212 of the proximal shaft bearing 121 is fastened to and supports the housing 50 of the electro-mechanical braking apparatus 100.

The brake motor 10 and the reducer 20 are adjacently fastened in the axial direction of the motor shaft 11 of the brake motor 10, and an end that is of the motor shaft 11 of the brake motor 10 and that faces away from the distal shaft bearing 122 is supported by the proximal shaft bearing 121, and performs coaxial transmission with the input shaft 21 of the reducer 20. Therefore, the end that is configured to support the motor shaft 11 of the brake motor 10 and that faces away from the distal shaft bearing 122 may be fastened to the housing 50 of the electro-mechanical braking apparatus 100. This can achieve stable support effect on the motor shaft 11 of the brake motor 10. In other words, while a quantity of shaft bearings 12 that are in the reducer 20 and that are configured to support the motor shaft 11 of the brake motor 10 is reduced, integration effect between the brake motor 10 and the reducer 20 is improved, and a structural design in the electro-mechanical braking apparatus 100 in this application is simplified to reduce a volume.

In addition, the inner ring 1211 of the proximal shaft bearing 121 may rotate relative to the outer ring 1212 of the proximal shaft bearing 121. Therefore, the proximal shaft bearing 121 can further enable the motor shaft 11 of the brake motor 10 to rotate around the axis of the motor shaft 11 while implementing that relative positions of the motor shaft 11 of the brake motor 10 and the housing 50 of the electro-mechanical braking apparatus 100 are fixed.

It may be understood that the motor shaft 11 of the brake motor 10 can be supported at different positions in the axial direction of the motor shaft 11 of the brake motor 10 with joint cooperation of the proximal shaft bearing 121 and the distal shaft bearing 122, so that a position of the motor shaft 11 of the brake motor 10 relative to the housing 50 of the electro-mechanical braking apparatus 100 is fixed, and then the motor shaft 11 of the brake motor 10 can stably rotate around the axis of the motor shaft 11, thereby ensuring effect of driving the reducer 20 to rotate synchronously.

In other words, the inner rings of the two shaft bearings 12 are sleeved on the motor shaft 11 of the brake motor 10, and the two shaft bearings 12 cooperate to support the motor shaft 11. This can ensure that the motor shaft 11 of the brake motor 10 rotates stably inside the brake motor 10 and inside the reducer 20.

In an embodiment, refer to FIG. 7 together with FIG. 6. The brake motor 10 includes a snap ring 13. In the axial direction of the motor shaft 11 of the brake motor 10, the motor shaft 11 of the brake motor 10 includes a proximal step surface 111 and a snap ring groove 112 that are spaced apart.

Specifically, as shown in FIG. 6 and FIG. 7, in the radial direction of the motor shaft 11 of the brake motor 10, the motor shaft 11 of the brake motor 10 has a maximum radius R1, and the maximum radius R1 of the motor shaft 11 of the brake motor 10 is greater than a radius R2 of an inner hole of the proximal shaft bearing 121, that is, an inner hole of the inner ring 1211 of the proximal shaft bearing 121. The radius R2 of the inner hole of the proximal shaft bearing 121 is a radius of the inner ring 1211 of the proximal shaft bearing 121 in a radial direction of the proximal shaft bearing 121, or may be understood as a radius of the middle section 11a of the motor shaft 11 of the brake motor 10 in the radial direction of the motor shaft 11 of the brake motor 10.

As the inner ring 1211 of the proximal shaft bearing 121 is sleeved and fastened on the motor shaft 11 of the brake motor 10, in the axial direction of the motor shaft 11 of the brake motor 10, a radius of the motor shaft 11 of the brake motor 10 corresponding to a position of the proximal shaft bearing 121 is less than the maximum radius R1 of the motor shaft 11 of the brake motor 10, so that a difference between radii of the motor shaft 11 of the brake motor 10 is caused, and a "step" structure is formed on outer circumferential surfaces of different radii on the motor shaft 11 of the brake motor 10.

As shown in FIG. 7, a surface structure that is at a step structure position of the motor shaft 11 of the brake motor 10 and that is perpendicular to the axial direction of the motor shaft 11 of the brake motor 10 is the proximal step surface 111.

The snap ring groove 112 is provided on an outer circumferential surface of the motor shaft 11 of the brake motor 10. The snap ring groove 112 is provided at a spacing on a side that is of the proximal shaft bearing 121 and that faces away from the proximal step surface 111. The snap ring 13 is embedded in the snap ring groove 112, and in the axial direction of the motor shaft 11 of the brake motor 10, a distance between the proximal step surface 111 and the snap ring 13 is equal to a thickness of the proximal shaft bearing 121, to fasten the proximal shaft bearing 121 to the motor shaft 11 of the brake motor 10.

In other words, when the snap ring 13 is embedded in the snap ring groove 112, in the axial direction of the motor shaft 11 of the brake motor 10, a distance between the proximal step surface 111 and a surface that is of the snap ring 13 and that faces the proximal step surface 111 is equal to the thickness of the proximal shaft bearing 121, so that the proximal step surface 111 and the surface that is of the snap ring and that faces the proximal step surface 111 can abut against the proximal shaft bearing 121 respectively from two opposite ends of the proximal shaft bearing 121, to limit movement of the proximal shaft bearing 121 in the axial direction of the motor shaft 11 of the brake motor 10.

With joint cooperation of the snap ring 13 and the proximal step surface 111 of the motor shaft 11 of the brake motor 10, the proximal shaft bearing 121 and the motor shaft 11 can be relatively fastened. This avoids a case in which the proximal shaft bearing 121 moves in the axial direction of the motor shaft 11 of the brake motor 10 to reduce support effect on the motor shaft 11 of the brake motor 10.

It needs to be noted that the thickness of the proximal shaft bearing 121 in this specification of this application is a distance between two opposite surfaces of the proximal shaft bearing 121 in an axial direction of the proximal shaft bearing 121.

In embodiments of this application, the motor shaft 11 of the brake motor 10 and the input shaft 21 of the reducer 20 are of an integrated structure. In the electro-mechanical braking apparatus 100 provided in this application, the motor shaft 11 of the brake motor 10 and the input shaft 21 of the reducer 20 are of an integrated structure, so that not only a connection structure design of the motor shaft 11 and the input shaft 21 can be omitted, but also the input shaft 21 and the motor shaft 11 can share a same distal shaft bearing 122. This reduces a shaft bearing structure of the input shaft 21 in the reducer 20, thereby improving an integration level of the electro-mechanical braking apparatus 100 and reducing occupied side space of the wheel of the vehicle 1000.

Specifically, an end that is of the motor shaft 11 of the brake motor 10 and that faces the reducer 20 extends into the reducer 20, and is used as a power input shaft of the reducer 20 to transfer power to the reducer 20. In other words, when the motor shaft 11 of the brake motor 10 rotates around the axis of the motor shaft 11 to serve as a power output shaft of the brake motor 10, the motor shaft 11 is also used as the power input shaft of the reducer 20 to transfer power to the reducer 20.

The motor shaft 11 of the brake motor 10 and the input shaft 21 of the reducer 20 are configured to be of an integrated structure, so that there is no need to separately dispose the input shaft 21 for driving the reducer 20, and a structural member for being in transmission connection to the motor shaft 11 of the brake motor 10 and the input shaft 21 of the reducer 20 can be omitted, thereby further simplifying an internal structure of the electro-mechanical braking apparatus 100 and reducing a volume.

It needs to be noted that, in embodiments shown in FIG. 5 to FIG. 7, only an example in which the motor shaft 11 of the brake motor 10 and the input shaft 21 of the reducer 20 are of an integrated structure is used for description, but it is not limited to that the motor shaft 11 of the brake motor 10 and the input shaft 21 of the reducer 20 can only be constructed into the integrated structure. In another embodiment of this application, the motor shaft 11 of the brake motor 10 may alternatively be in transmission connection to the input shaft 21 of the reducer 20 by using a structural member like a coupling, to implement a function of inputting power to the reducer 20 by the brake motor 10.

In an embodiment, the reducer 20 includes a parking ratchet 24. The parking ratchet 24 is sleeved on the input shaft 21 and is fastened to the input shaft 21 in a circumferential direction of the input shaft 21. The parking ratchet 24 is configured to cooperate with external ratches (not shown in the figure) to limit rotation of the input shaft 21. As shown in FIG. 5 and FIG. 6, the input shaft 21 and the motor shaft 11 of the brake motor 10 are integrated. In this case, in this specification of this application, an example in which the parking ratchet 24 is sleeved on the motor shaft 11 of the brake motor 10 is used for description.

Specifically, the input shaft 21 includes a limiting section 21b, which may be understood as a limiting section 11c of the motor shaft 11 of the brake motor 10. In the axial direction of the motor shaft 11 of the brake motor 10, the limiting section 11c is located between the proximal shaft bearing 121 and engaging teeth 14, that is, the limiting section 11c is located, in the axial direction of the motor shaft 11 of the brake motor 10, on a side that is of the proximal shaft bearing 121 and that is away from the distal shaft bearing 122.

The parking ratchet 24 is sleeved on the limiting section 11c of the motor shaft 11 of the brake motor 10, and is coaxially fastened relative to the motor shaft 11 of the brake motor 10. When the motor shaft 11 of the brake motor 10 rotates, the parking ratchet 24 can rotate with the motor shaft 11 of the brake motor 10 around the axis of the motor shaft 11 of the brake motor 10.

It may be understood that, when the parking ratchet 24 is disposed on the input shaft 21, the external ratches may extend into the housing 50 to limit rotation of the input shaft 21, so that the electro-mechanical braking apparatus 100 further has a parking function.

In an embodiment, a spline (not shown in the figure) and a spline groove (not shown in the figure) that cooperate with each other are provided between the input shaft 21 and the parking ratchet 24, to implement fixed connection between the input shaft 21 and the parking ratchet 24.

Specifically, on the limiting section 21b of the input shaft 21, at least one spline is convexly provided in the circumferential direction of the input shaft 21, a spline groove that fits the spline is provided on an inner surface that is of the parking ratchet 24 and that faces the input shaft 21, and the spline of the limiting section 21b of the input shaft 21 extends into the spline groove, to limit movement of the parking ratchet 24 in the circumferential direction of the input shaft 21, and avoid relative rotation between the parking ratchet 24 and the input shaft 21.

It may be understood that the spline of the limiting section 21b of the input shaft 21 cooperates with the spline groove of the parking ratchet 24, so that the parking ratchet 24 is fastened relative to the input shaft 21 in the circumferential direction of the input shaft 21, and rotation of the input shaft 21 is limited by using the parking ratchet 24.

As shown in FIG. 6 and FIG. 7, in a circumferential direction of the motor shaft 11 of the brake motor 10, a transmission section 21a of the input shaft 21 (which may also be understood as that the motor shaft 11 includes a transmission section 11b) is provided with the evenly distributed engaging teeth 14 (which may also be understood as that the transmission section 21a of the input shaft 21 includes engaging teeth 211) configured to be in transmission connection to the output shaft 22 of the reducer 20. In the axial direction of the motor shaft 11 of the brake motor 10, the transmission section 11b is located on a side that is of the proximal shaft bearing 121 and that is away from the distal shaft bearing 122.

The transmission section 11b of the motor shaft 11 of the brake motor 10 extends into the reducer 20, and the engaging teeth 14 evenly distributed around the transmission section 11b can be engaged with the output shaft 22 of the reducer 20, so that transmission connection between the output shaft 22 of the reducer 20 and the motor shaft 11 of the brake motor 10 can be implemented. As the motor shaft 11 of the brake motor 10 and the input shaft 21 of the reducer 20 are integrated, it may also be understood that transmission connection between the input shaft 21 and the output shaft 22 of the reducer 20 can be implemented by using the engaging teeth 14.

When the brake motor 10 drives the motor shaft 11 of the brake motor 10 to rotate, the motor shaft 11 of the brake motor 10 synchronously drives, by using the engaging teeth 14 evenly distributed in the circumferential direction of the motor shaft 11, the output shaft 22 of the reducer 20 to output power, to drive the brake 40 to brake the vehicle 1000.

It may be understood that the transmission section 11b is disposed on a side that is of the motor shaft 11 of the brake motor 10 and that is close to the reducer 20, and the transmission section 11b is provided with the engaging teeth 14 in transmission connection to the reducer 20, so that a motor gear of the reducer 20 is further integrated onto the motor shaft 11 of the brake motor 10. This omits cooperation of a separate motor gear mounted on the motor shaft 11 of the brake motor 10, thereby simplifying an internal structure of the electro-mechanical braking apparatus 100 and reducing a volume. In addition, as the motor shaft 11 of the brake motor 10 and the input shaft 21 are constructed into an integrated structure, it may also be understood that a motor gear is integrated onto the input shaft 21 of the reducer 20. This omits a motor gear separately mounted on the input shaft 21, thereby simplifying an internal structure of the electro-mechanical braking apparatus 100 and reducing a volume.

In an embodiment, in a radial direction of the input shaft 21 of the reducer 20, a radius R3 of the engaging teeth 211 is less than a radius of the inner hole of the shaft bearing 12. The radius R3 of the engaging teeth 211 may be understood as a radius of the transmission section 21a of the input shaft 21 in the radial direction of the input shaft 21, and the radius of the inner hole of the shaft bearing 12 may be understood as the radius R2 of the inner hole of the proximal shaft bearing 121.

The radius R3 of the engaging teeth 211 is set to be less than the radius of the inner hole of the shaft bearing 12, so that the shaft bearing 12 can be sleeved on the input shaft 21 from a side close to the transmission section 21a. This facilitates mounting of the shaft bearing 12.

In an embodiment, FIG. 8 is a diagram of one side of a cross-sectional structure of the brake motor 10 of the electro-mechanical braking apparatus 100 according to an embodiment of this application. As shown in FIG. 8, in the axial direction of the motor shaft 11 of the brake motor 10, the shaft bearing 12 that supports the housing 50 of the electro-mechanical braking apparatus 100 is in fixed connection to the motor shaft 11 of the brake motor 10, and the shaft bearing 12 that supports the outer shell 16 of the brake motor 10 is slidably connected to the motor shaft 11 of the brake motor 10. In other words, the proximal shaft bearing 121 is in fixed connection to the motor shaft 11 of the brake motor 10, and the distal shaft bearing 122 is slidably connected to the motor shaft 11 of the brake motor 10.

Specifically, the two opposite surfaces of the proximal shaft bearing 121 in the axial direction of the proximal shaft bearing 121 respectively abut against the proximal step surface 111 and the snap ring 13, so that the proximal shaft bearing 121 is fastened relative to the motor shaft 11 of the brake motor 10 in the axial direction of the motor shaft 11 of the brake motor 10. This can limit relative movement between the proximal shaft bearing 121 and the motor shaft 11 of the brake motor 10 in the axial direction of the motor shaft 11 of the brake motor 10 while achieving support effect on the motor shaft 11 of the brake motor 10. The distal shaft bearing 122 may slide relative to the motor shaft 11 in the axial direction of the motor shaft 11 of the brake motor 10.

As shown in FIG. 8, in the radial direction of the motor shaft 11 of the brake motor 10, the maximum radius R1 of the motor shaft 11 of the brake motor 10 is greater than a radius R4 of the inner ring 1221 of the distal shaft bearing 122. In this case, in the axial direction of the motor shaft 11 of the brake motor 10, the maximum radius R1 of the motor shaft 11 of the brake motor 10 has a difference at a position corresponding to the distal shaft bearing 122, so that an outer circumferential surface of the motor shaft 11 of the brake motor 10 forms a step structure at a position close to the distal shaft bearing 122 in the axial direction of the motor shaft 11 of the brake motor 10.

A surface structure that is at a step structure position that is of the motor shaft 11 of the brake motor 10 and that is close to the distal shaft bearing 122, and that is perpendicular to the axial direction of the motor shaft 11 of the brake motor 10 is a distal step surface 113. In the axial direction of the motor shaft 11 of the brake motor 10, a surface of a side that is of the distal shaft bearing 122 and that faces the proximal shaft bearing 121 abuts against the distal step surface 113.

The brake motor 10 includes an elastic member 15. In the axial direction of the motor shaft 11 of the brake motor 10, the elastic member 15 of the brake motor 10 abuts against the outer shell 16 of the brake motor 10 and another shaft bearing 12. The elastic member 15 of the brake motor 10 is configured to provide a pushing force for the shaft bearing 12, so that the shaft bearing 12 is attached to the distal step surface 113 of the motor shaft 11 of the brake motor 10. As shown in FIG. 8, the shaft bearing 12 is the distal shaft bearing 122 in FIG. 8.

For example, as shown in FIG. 8, in the axial direction of the motor shaft 11 of the brake motor 10, the elastic member 15 of the brake motor 10 is located on a side that is of the distal shaft bearing 122 and that faces away from the distal step surface 113, and abuts against the outer shell 16 of the brake motor 10 and the distal shaft bearing 122. The elastic member 15 of the brake motor 10 is configured to provide a pushing force for the distal shaft bearing 122, so that the distal shaft bearing 122 is attached to the distal step surface 113 of the motor shaft 11 of the brake motor 10.

The elastic member 15 of the brake motor 10 extends in the axial direction of the motor shaft 11 of the brake motor 10. One end of the elastic member 15 of the brake motor 10 abuts against the outer shell 16 of the brake motor 10, and the other end may abut against the outer ring 1222 of the distal shaft bearing 122.

There are two elastic members 15 of the brake motor 10. The two elastic members 15 of the brake motor 10 are symmetrically distributed at two opposite ends of the distal shaft bearing 122 about the axis of the motor shaft 11 of the brake motor 10, so that the elastic members 15 of the brake motor 10 evenly apply a pushing force in a circumferential direction of the distal shaft bearing 122. This avoids a bad case in which the distal shaft bearing 122 tilts due to uneven distribution of the force caused by uneven distribution of the elastic members 15 of the brake motor 10.

It may be understood that, when the elastic member 15 of the brake motor 10 drives the distal shaft bearing 122 to slide relative to the motor shaft 11 of the brake motor 10 in the axial direction of the motor shaft 11 of the brake motor 10, the motor shaft 11 of the brake motor 10 also slides relative to the distal shaft bearing 122 in an axial direction of the distal shaft bearing 122, so that an end that is of the motor shaft 11 of the brake motor 10 and that faces away from the proximal shaft bearing 121 is in a floating state in the axial direction of the motor shaft 11.

In a working process of the brake motor 10 and in a process in which the motor shaft 11 of the brake motor 10 cooperates with the reducer 20 for transmission, the motor shaft 11 of the brake motor 10 generates axial stress concentration due to heat of the brake motor 10 or an engaging force of the reducer 20. By configuring slidable connection between the motor shaft 11 of the brake motor 10 and the distal shaft bearing 122, some axial stress of the motor shaft 11 of the brake motor 10 can be released, to protect the motor shaft 11 of the brake motor 10.

In addition, in the embodiment shown in FIG. 8, in the axial direction of the motor shaft 11 of the brake motor 10, the two shaft bearings 12 on the motor shaft 11 of the brake motor 10 form a fitting structure in which one end is fastened and the other end is floating, so that some axial stress of the motor shaft 11 of the brake motor 10 can be released, to protect the motor shaft 11 of the brake motor 10. In other words, the distal shaft bearing 122 is slidably connected to the motor shaft 11 of the brake motor 10, and the proximal shaft bearing 121 is in fixed connection to the motor shaft 11 of the brake motor 10, so that one end of the motor shaft 11 of the brake motor 10 is in a floating state, and the other end is in a fastened state. This can improve a capability of the motor shaft 11 of the brake motor 10 to bear a radial force and an axial force applied by the engaging teeth 14, thereby improving transmission reliability of the motor shaft 11 of the brake motor 10.

It needs to be noted that, in the embodiment shown in FIG. 8, only an example in which there are two elastic members 15 of the brake motor 10 is used for description, but embodiments of this application are not limited to that only two elastic members 15 of the brake motor 10 can be disposed. In another embodiment of this application, a quantity of disposed elastic members 15 of the brake motor 10 may be adjusted based on an actual design requirement.

In an embodiment, there are a plurality of elastic members 15 of the brake motor 10. The plurality of elastic members 15 of the brake motor 10 are evenly distributed between the outer shell 16 and the distal shaft bearing 122 of the brake motor 10 in the circumferential direction of the distal shaft bearing 122, to improve effect of driving, by the elastic members 15 of the brake motor 10, the distal shaft bearing 122 to slide.

In embodiments of this application, the electro-mechanical braking apparatus 100 includes the housing 50. The housing 50 is configured to accommodate the reducer 20 and the control circuit board 30. The housing 50 includes a reducer accommodating cavity 50a and a control circuit accommodating cavity 50b. The reducer accommodating cavity 50a is provided to accommodate a gear set of the reducer 20. The control circuit accommodating cavity 50b is provided to accommodate the control circuit board 30.

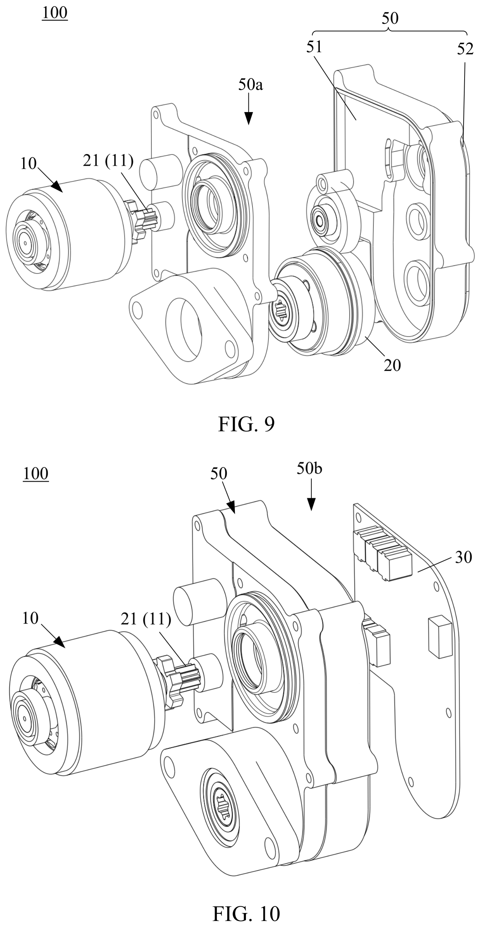

Refer to FIG. 9 and FIG. 10 together. FIG. 9 is a diagram of one side of an exploded structure of the electro-mechanical braking apparatus 100 according to an embodiment of this application. FIG. 10 is a diagram of another side of an exploded structure of the electro-mechanical braking apparatus 100 according to the embodiment shown in FIG. 9 of this application.

As shown in FIG. 9 and FIG. 10, the housing 50 includes a separator plate 51 and a cover plate 52, and the control circuit board 30 is arranged between the separator plate 51 and the cover plate 52 in the axial direction of the brake motor 10. The separator plate 51 is configured to separate the reducer accommodating cavity 50a from the control circuit accommodating cavity 50b. In the electro-mechanical braking apparatus 100 provided in this application, the reducer accommodating cavity 50a and the control circuit accommodating cavity 50b are arranged in a side-mounted manner. This not only reduces a volume of the electro-mechanical braking apparatus 100, but also facilitates an integrated design of the housing 50 in the electro-mechanical braking apparatus 100. In addition, in the electro-mechanical braking apparatus 100 provided in this application, the reducer accommodating cavity 50a and the control circuit accommodating cavity 50b are formed through separation by the separator plate 51. This can not only prevent lubricating oil in the reducer 20 from affecting a circuit component, but also facilitate separate assembly and maintenance of the reducer 20 and the control circuit board 30.

In an embodiment, in the axial direction of the input shaft 21 of the reducer 20, the brake motor 10, the reducer 20, and the control circuit board 30 are sequentially arranged, the housing 50 is disposed on a side that is of the brake motor 10 and that is close to the reducer 20, and both the reducer 20 and the control circuit board 30 are accommodated in the housing 50. The housing 50 is fastened relative to the brake motor 10, so that the motor shaft 11 of the brake motor 10 can perform coaxial transmission with the input shaft 21 of the reducer 20, and then can input power to the reducer 20 by using the input shaft 21.

In an embodiment, a thickness direction of the separator plate 51 is parallel to the axial direction of the input shaft 21 of the reducer 20. In the embodiment shown in FIG. 9, the separator plate 51 is a plate structure and has two opposite planes. In this case, the thickness direction of the separator plate 51 may be understood as a spacing direction of the two opposite planes of the separator plate 51, or may be understood as a direction perpendicular to the planes of the separator plate 51.

In an embodiment, in the axial direction of the input shaft 21 of the reducer 20, the reducer 20 and the control circuit board 30 are spaced apart and accommodated in the housing 50, and the separator plate 51 is arranged between the reducer 20 and the control circuit board 30. A plane direction of the separator plate 51 is perpendicular to the axial direction of the motor shaft 11 of the brake motor 10, so that an internal cavity of the housing 50 for accommodating the reducer 20 and the control circuit board 30 can be divided into the reducer accommodating cavity 50a and the control circuit accommodating cavity 50b.

In an embodiment, the reducer accommodating cavity 50a is closer to the brake motor 10 than the control circuit accommodating cavity 50b. In the plane direction of the separator plate 51, an outer edge of the separator plate 51 may match an inner edge of the housing 50, to improve effect of separating the reducer 20 from the control circuit board 30 by the separator plate 51.

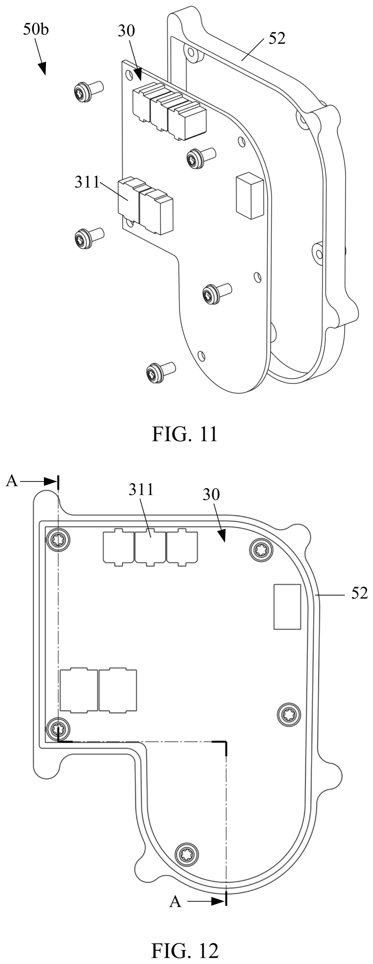

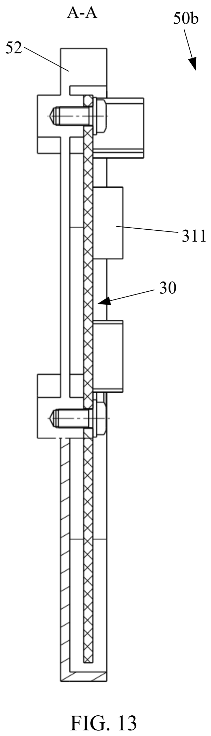

Refer to FIG. 11 together with FIG. 10. FIG. 11 is a diagram of one side of an exploded structure of the housing 50 and the control circuit board 30 of the electro-mechanical braking apparatus 100 according to an embodiment of this application. As shown in FIG. 10 and FIG. 11, the control circuit board 30 is accommodated in the control circuit accommodating cavity 50b. Several electronic components 311 (as shown in FIG. 13) may be integrated onto the control circuit board 30, and the electronic components 311 may be electrically connected to each other, to implement signal transmission between the electronic components 311. The control circuit board 30 may further include a control circuit configured to drive and control the brake motor 10, so that the brake motor 10 can drive the brake 40 by using the reducer 20 to brake the vehicle 1000.

Specifically, the housing 50 includes the cover plate 52, and the cover plate 52 is fastened relative to the separator plate 51. In the axial direction of the input shaft 21 of the reducer 20, the cover plate 52 and the separator plate 51 are parallel and are spaced apart, and the cover plate 52 is located on a side that is of the separator plate 51 and that faces away from the reducer 20, so that the cover plate 52 and the separator plate 51 can enclose and form the control circuit accommodating cavity 50b in the housing 50, which is separated from the reducer 20.

It may be understood that the separator plate 51 can achieve effect of separating the reducer 20 from the control circuit board 30. This can avoid a case in which lubricating oil in the reducer 20 spatters onto the control circuit board 30 in a running process of the reducer 20, and the lubricating oil is in direct contact with a functional element on the control circuit board 30 to adversely affect working performance of the control circuit board 30 and reduce a service life of the control circuit board 30.

In other words, the reducer 20 and the control circuit board 30 are separated by using the separator plate 51. This can ensure normal working of the control circuit board 30, and can increase a service life of the control circuit board 30.

In an embodiment, the separator plate 51, the control circuit board 30, and the cover plate 52 are arranged in parallel, and the control circuit board 30 is located between the separator plate 51 and the cover plate 52.

It may be understood that, as several electronic components 311 are usually integrated on the control circuit board 30, the control circuit board 30 is usually of a plate structure, and a thickness of the control circuit board 30 in a direction perpendicular to a plane of the control circuit board 30 is the smallest. The control circuit board 30 and the separator plate 51 are arranged in parallel, so that an arrangement direction of the control circuit board 30 fits an internal structure of the housing 50, to reduce space occupied by the control circuit board 30 in the housing 50, thereby implementing a miniaturization design of the housing 50, and further reducing a volume of the electro-mechanical braking apparatus 100 in this application.

In an embodiment, the cover plate 52 is detachably connected to the housing 50.

In this embodiment, the cover plate 52 is detachably connected to the housing 50, so that the cover plate 52 can be detached from the housing 50, and then a side that is of the housing 50 and that faces away from the brake motor 10 can be in an open state, that is, a cavity body of the control circuit accommodating cavity 50b is exposed outward. This facilitates mounting of the control circuit board 30 in the control circuit accommodating cavity 50b or facilitates an operation like replacement or maintenance of the control circuit board 30, that is, can improve assembly efficiency of the control circuit board 30.

In embodiments of this application, at least one of the separator plate 51 or the cover plate 52 is configured to fasten the control circuit board 30. In the electro-mechanical braking apparatus 100 provided in this application, the side-mounted control circuit board 30 may be fastened by using at least one of the separator plate 51 or the cover plate 52. This facilitates structural stability of the control circuit board 30, thereby improving electrical reliability of the electro-mechanical braking apparatus 100.

In an embodiment, refer to FIG. 12 and FIG. 13 together with FIG. 11. FIG. 12 is a diagram of one side of a structure of the electro-mechanical braking apparatus 100 with a part of the structure omitted according to the embodiment shown in FIG. 11 of this application. FIG. 13 is a diagram of one side of a cross-sectional structure of the electro-mechanical braking apparatus 100 at a position A-A according to the embodiment shown in FIG. 12 of this application.

As shown in FIG. 11 to FIG. 13, the control circuit board 30 is in fixed connection to the cover plate 52 and is accommodated in the control circuit accommodating cavity 50b enclosed and formed by the separator plate 51 and the cover plate 52, that is, the control circuit board 30 is fixedly disposed on a surface of a side that is of the cover plate 52 and that faces the control circuit accommodating cavity 50b.

It may be understood that, as the cover plate 52 is detachably connected to the housing 50, when the control circuit board 30 is fixedly disposed on the cover plate 52, that is, the cover plate 52 of the housing 50 is disposed on a side close to the control circuit board 30, the control circuit board 30 can be conveniently mounted and maintained.

In addition, the control circuit board 30 is fixedly disposed on the side that is of the cover plate 52 and that faces the control circuit accommodating cavity 50b, so that the control circuit board 30 can be accommodated in the control circuit accommodating cavity 50b, that is, the control circuit board 30 is accommodated in the housing 50, and then the housing 50 can accommodate and protect several electronic components 311 integrated on the control circuit board 30. This avoids corrosion of the control circuit board 30 by external impurities and dust to affect working reliability of the control circuit board 30 and reduce a service life of the control circuit board 30.

It needs to be noted that, in embodiments shown in FIG. 12 and FIG. 13, only a possible connection manner between the control circuit board 30 and the cover plate 52 is used as an example for description, but a manner of the control circuit board 30 being in fixed connection to the cover plate 52 is not limited. In another embodiment of this application, the control circuit board 30 may alternatively be in fixed connection to the cover plate 52 in another possible manner, for example, but not limited to, riveting, soldering, snap-fitting, or bonding. This is not specifically limited in this application.

In an embodiment, the separator plate 51 may be in fixed connection to the cover plate 52, so that the separator plate 51 and the control circuit board 30 are fastened in the housing 50 together with the cover plate 52. In other words, both the separator plate 51 and the control circuit board 30 are accommodated in the housing 50.

Through fixed connection between the control circuit board 30 and the cover plate 52, and fixed connection among the separator plate 51, the control circuit board 30, and the cover plate 52, it is convenient for mounting and sealing protection of the control circuit board 30 in the housing 50.

In an embodiment, the separator plate 51 may be made of, but not limited to, a metal or a metal alloy like an aluminum alloy.

In an embodiment, a material of the separator plate 51 may be but is not limited to resin, the separator plate 51 may be formed on the cover plate 52 by using, but not limited to, an injection molding process, and the separator plate 51 may be at least partially in contact with the control circuit board 30 to fasten the control circuit board 30.

It may be understood that the separator plate 51 is formed on the cover plate 52 by using the injection molding process, and the control circuit board 30 is synchronously fastened on the cover plate 52 in the injection molding process of the separator plate 51. This simplifies an assembly process of the control circuit board 30 while ensuring sealing protection of the control circuit board 30 by the separator plate 51.

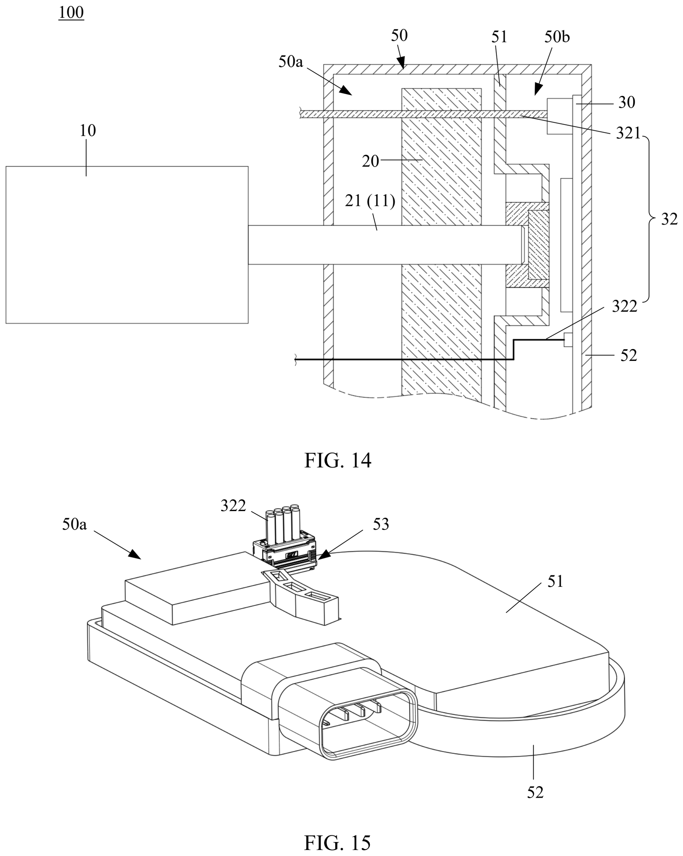

Further, FIG. 14 is a diagram of one side of a structure of the electro-mechanical braking apparatus 100 with a part of the structure omitted according to an embodiment of this application. The control circuit board 30 includes a transmission member 32. In an embodiment, the transmission member 32 is configured to implement electrical connection between the control circuit in the control circuit board 30 and the brake motor 10 or another functional structural member. In an embodiment, the transmission member 32 is configured to transmit a control signal sent by the control circuit on the control circuit board 30, so that the control circuit on the control circuit board 30 can control working status of the brake motor 10 or another functional structural member.

As shown in FIG. 14, the transmission member 32 extends along the motor shaft 11 of the brake motor 10, and the transmission member 32 penetrates the separator plate 51 and the reducer 20, and is electrically connected between the brake motor 10 and the control circuit on the control circuit board 30.

In other words, one end of the transmission member 32 is electrically connected to the control circuit on the control circuit board 30, and the other end of the transmission member 32 first penetrates the separator plate 51 from the control circuit accommodating cavity 50b and extends into the reducer accommodating cavity 50a, then penetrates the reducer 20 in the reducer accommodating cavity 50a and extends out of the housing 50, and finally extends to be electrically connected to the brake motor 10, so that the transmission member 32 is electrically connected between the control circuit on the control circuit board 30 and the brake motor 10. This implements a function of transmitting a signal applied by the control circuit on the control circuit board 30 to the brake motor 10.

The transmission member 32 includes a conductive copper bar 321. The conductive copper bar 321 is configured to transmit an alternating current to the brake motor 10. Specifically, the conductive copper bar 321 extends in a direction parallel to the motor shaft 11 of the brake motor 10. In other words, one end of the conductive copper bar 321 is electrically connected to the control circuit on the control circuit board 30 accommodated in the control circuit accommodating cavity 50b, and the other end that faces away from the control circuit board 30 extends and penetrates the separator plate 51 and extends into the reducer accommodating cavity 50a, and then penetrates the reducer 20 and extends out of the housing 50, to extend in the direction parallel to the motor shaft 11 of the brake motor 10 to be electrically connected to the brake motor 10.

It may be understood that, as the conductive copper bar 321 has high rigidity and is not easy to bend, the conductive copper bar 321 extends in the direction parallel to the motor shaft 11 of the brake motor 10, and sequentially penetrates the separator plate 51 and the reducer 20 and extends out of the housing 50 to be electrically connected to the brake motor 10. This facilitates the arrangement and mounting of the conductive copper bar 321, and fully utilizes space of functional structural members accommodated in the reducer accommodating cavity 50a and the control circuit accommodating cavity 50b, avoiding a need to design separate space for arranging the conductive copper bar 321.

In addition, the conductive copper bar 321 may carry high-power signal transmission, so that the conductive copper bar 321 of the transmission member 32 can improve working reliability of the electro-mechanical braking apparatus 100 in this application.

In an embodiment, an outer surface of the conductive copper bar 321 may be coated with an insulation layer (not shown in the figure).

The outer surface of the conductive copper bar 321 is coated with the insulation layer, so that signal crosstalk, short circuit, or another bad condition that is caused by contact between the conductive copper bar 321 and an adjacent conductive object can be avoided. In other words, by performing insulation processing on the outer surface of the conductive copper bar 321, signal transmission reliability of the conductive copper bar 321 can be improved, and safety of the electro-mechanical braking apparatus 100 can be improved.

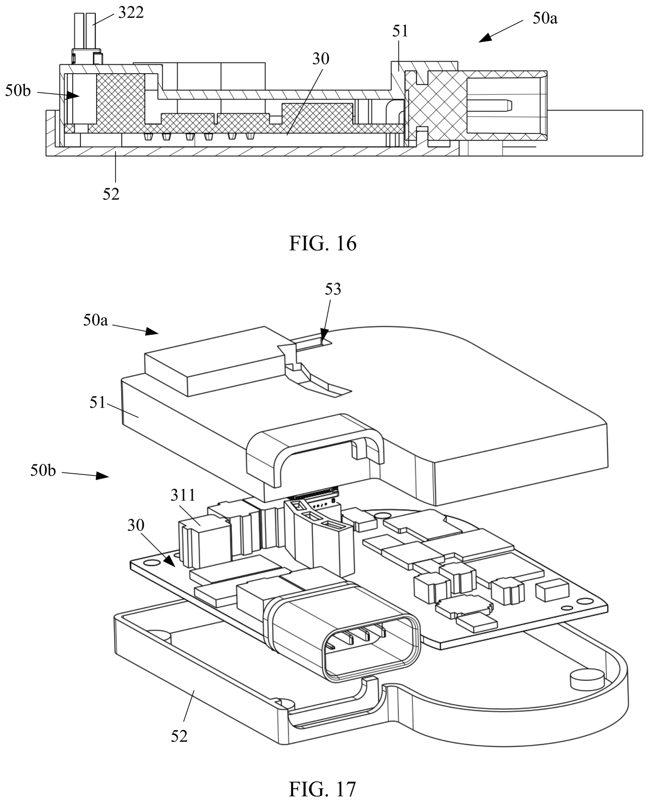

Refer to FIG. 15 to FIG. 17 together with FIG. 14. FIG. 15 is a diagram of one side of a structure of the electro-mechanical braking apparatus 100 with a part of the structure omitted according to an embodiment of this application. FIG. 16 is a diagram of one side of a cross-sectional structure of the electro-mechanical braking apparatus 100 according to the embodiment shown in FIG. 14 of this application. FIG. 17 is a diagram of one side of an exploded structure of the electro-mechanical braking apparatus 100 according to the embodiment shown in FIG. 14 of this application.

The transmission member 32 may include a transmission line 322. The transmission line 322 is electrically connected between the control circuit on the control circuit board 30 and the brake motor 10, to transmit a control signal to the brake motor 10, to further control the brake motor 10 to implement different working states.

Specifically, as shown in FIG. 14, one end of the transmission line 322 is electrically connected to the control circuit on the control circuit board 30, and the other end that faces away from the control circuit board 30 extends from the control circuit board 30, first penetrates the separator plate 51 from the control circuit accommodating cavity 50b and extends into the reducer accommodating cavity 50a, and then penetrates the reducer 20 in the reducer accommodating cavity 50a and extends out of the housing 50.

As shown in FIG. 15 to FIG. 17, in the axial direction of the motor shaft 11 of the brake motor 10, a line groove 53 is provided inside the housing 50, and the transmission line 322 is embedded in the line groove 53 to penetrate the separator plate 51 and the reducer 20.

The line groove 53 is provided inside the housing 50. For example, as shown in FIG. 15 to FIG. 17, the line groove 53 may be provided on the separator plate 51, and in a direction perpendicular to a plane of the separator plate 51, that is, in the axial direction of the motor shaft 11 of the brake motor 10, the line groove 53 runs through the separator plate 51, so that the transmission line 322 penetrates the separator plate 51 when being embedded in the line groove 53.

An extension shape of the line groove 53 inside the housing 50 is the same as a layout direction of the transmission line 322 inside the housing 50, so that the transmission line 322 can be embedded in the line groove 53 and can be electrically connected between the control circuit board 30 and the brake motor 10, to transmit a control signal applied by the control circuit board 30 to the brake motor 10.

It may be understood that the transmission line 322 arranged inside the housing 50 is embedded in the line groove 53. This can achieve holding effect on the transmission line 322, to ensure effect of fastening the transmission line 322 inside the housing 50, avoiding a case in which the transmission line 322 is loose or falls off to affect normal working of another functional structural member inside the electro-mechanical braking apparatus 100, and improving reliability of signal transmission by the transmission line 322.

In addition, the control circuit board 30 is further configured to fasten the transmission line 322, the transmission line 322 is configured to transmit a control signal, and the transmission line 322 extends through the line groove 53 inside the housing 50, so that a volume occupied by the transmission line 322 in the electro-mechanical braking apparatus 100 can be omitted, and reliable transmission of the control signal can be ensured.

It needs to be noted that, in the embodiment shown in FIG. 14 in this application, only a possible layout manner of the conductive copper bar 321 and the transmission line 322 in the housing 50 is used as an example for description, but does not indicate an actual layout manner of the conductive copper bar 321 and the transmission line 322 in the housing 50. In embodiments of this application, the layout manner of the conductive copper bar 321 and the transmission line 322 in the housing 50 is adjusted based on an actual design requirement.

For example, in a possible embodiment, when the conductive copper bar 321 penetrates the reducer 20, extension of the conductive copper bar 321 in the reducer 20 needs to avoid a functional structural member like a transmission gear in the reducer 20, so that the conductive copper bar 321 penetrates the reducer 20 to implement a miniaturization and simplification design of the electro-mechanical braking apparatus 100 in this application, without affecting the reducer 20 or another functional structural member in the housing 50, to improve working reliability of the electro-mechanical braking apparatus 100 in this application.

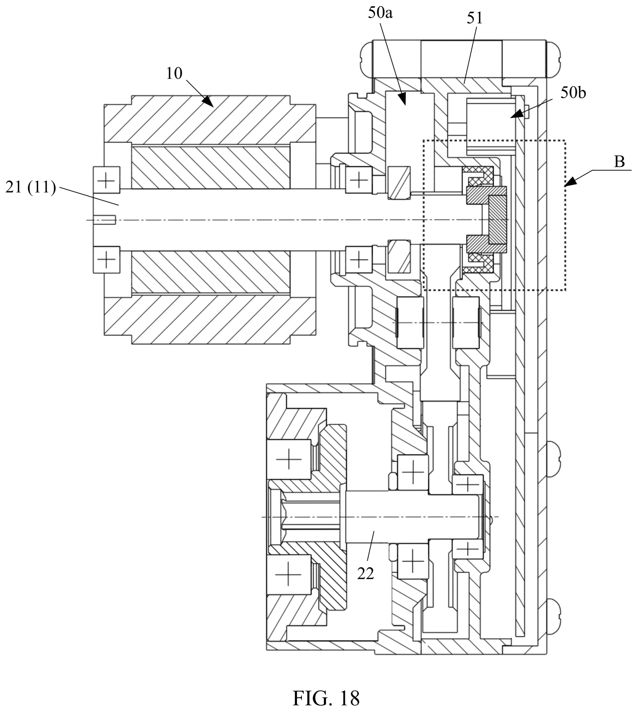

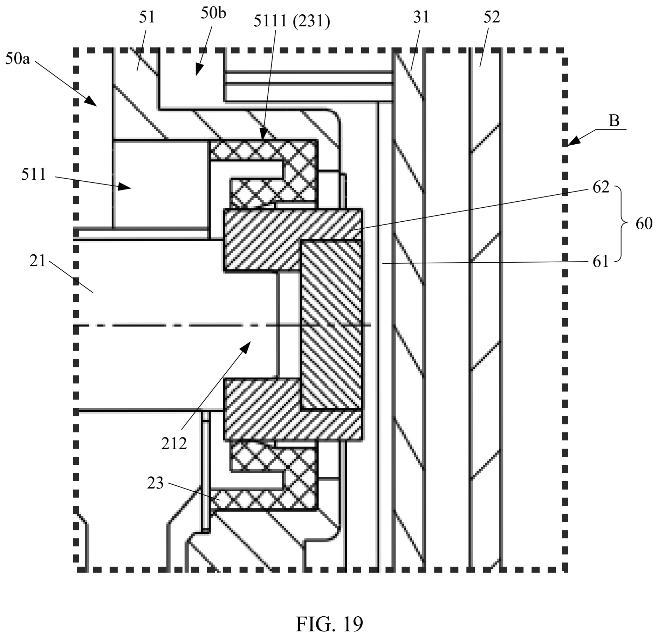

In an embodiment, refer to FIG. 18 and FIG. 19 together. FIG. 18 is a diagram of one side of a cross-sectional structure of the electro-mechanical braking apparatus 100 with a part of the structure omitted according to an embodiment of this application. FIG. 19 is an enlarged diagram of one side of a partial structure of the electro-mechanical braking apparatus 100 at a position B according to the embodiment shown in FIG. 18 of this application.

In embodiments of this application, the electro-mechanical braking apparatus 100 includes a position sensor 60, the position sensor 60 is configured to detect a rotation angle of the brake motor 10, the position sensor 60 includes a stator 61 and a rotor 62, the control circuit board 30 is configured to fasten the stator 61, and the input shaft 21 is configured to be in coaxial transmission connection to the motor shaft 11 and the rotor 62. In an embodiment, the input shaft 21 is configured to penetrate the separator plate 51 and be in transmission connection to the rotor 62 and the motor shaft 11. For example, the input shaft 21 includes an extension section 212 that extends toward the control circuit board 30 and penetrates the separator plate 51, the rotor 62 is located at an end portion of the extension section 212 and is coaxially fastened to the extension section 212, the stator 61 is fastened to the control circuit board 30, and a central axis of the stator 61 coincides with a rotation axis of the input shaft 21.

Specifically, as shown in FIG. 19, the position sensor 60 may be, but is not limited to, any one of a magnetoresistive sensor, an eddy current sensor, or a photoelectric sensor.

In the electro-mechanical braking apparatus 100 provided in this application, the stator 61 of the position sensor 60 and the control circuit of the brake motor 10 are both fastened to the control circuit board 30. This facilitates an integrated design of circuit components in the electro-mechanical braking apparatus 100. In addition, the control circuit board 30 and the brake motor 10 are arranged on two sides of the input shaft 21 of the reducer 20. This facilitates mounting and maintenance of the position sensor 60 or another circuit component in the control circuit board 30. In addition, in the electro-mechanical braking apparatus 100 provided in this application, the control circuit board 30 is vertically arranged with the output shaft 22 and the input shaft 21 of the reducer 20, so that the electro-mechanical braking apparatus 100 can more fully utilize side space of the wheel of the vehicle 1000, thereby reducing occupied radial top space of the wheel of the vehicle 1000.

For example, the rotor 62 of the position sensor 60 is sleeved on the extension section 212, and is located on a side that is of the extension section 212 and that faces away from the brake motor 10. The stator 61 of the position sensor 60 is fastened on the control circuit board 30, and is located on a surface that is of the control circuit board 30 and that is close to the reducer 20, that is, the stator 61 is located on a side that is of the control circuit board 30 and that faces away from the cover plate 52. The input shaft 21 rotates around the axis of the input shaft 21 to synchronously drive the rotor 62 to rotate.

It may be understood that, when the input shaft 21 rotates around the axis of the input shaft 21 and synchronously drives the rotor 62 to rotate, the rotor 62 rotates relative to the stator 61 around the rotation axis of the input shaft 21, and the stator 61 is fastened on the control circuit board 30, to cooperate with rotation of the rotor 62 to implement a detection function. In other words, through joint cooperation between the stator 61 and the rotor 62, the position sensor 60 can implement a function of detecting the rotation angle of the brake motor 10.

As the input shaft 21 of the reducer 20 and the motor shaft 11 of the brake motor 10 perform coaxial transmission, the input shaft 21 of the reducer 20 can reflect a rotation speed of the motor shaft 11 of the brake motor 10.

In this case, the position sensor 60 is disposed between the input shaft 21 of the reducer 20 and the control circuit board 30. This facilitates the arrangement of the position sensor 60. In addition, the control circuit board 30 may be directly electrically connected to the stator 61 to receive a detection signal. This omits a line between the position sensor 60 and the control circuit board 30, thereby simplifying an internal layout of the electro-mechanical braking apparatus 100.

It needs to be noted that, in the embodiment shown in FIG. 19, only a possible arrangement manner of the stator 61 and the rotor 62 of the position sensor 60 when the position sensor 60 is a magnetoresistive sensor is used as an example for description. In another embodiment of this application, when the position sensor 60 is an eddy current sensor or a photoelectric sensor, the stator 61 and the rotor 62 may also be disposed in the arrangement manner shown in FIG. 19.

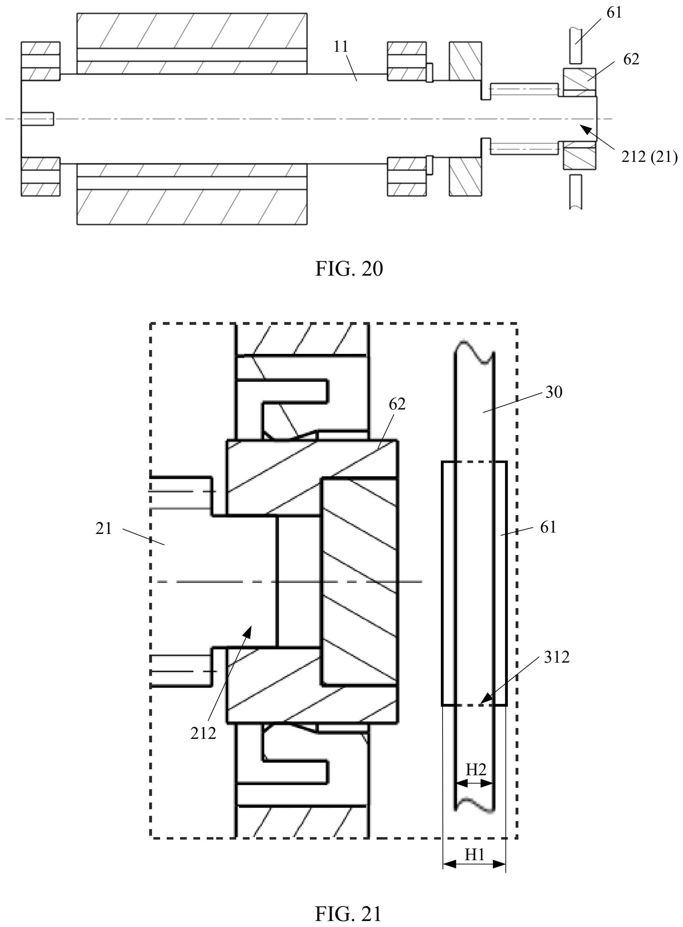

For example, in a possible embodiment, FIG. 20 is a diagram of one side of a cross-sectional structure of the brake motor 10 of the electro-mechanical braking apparatus 100 according to an embodiment of this application. As shown in FIG. 20, the stator 61 of the position sensor 60 is coaxially sleeved on a periphery of the rotor 62, and in the radial direction of the input shaft 21, an outer circumferential surface of the rotor 62 and an inner circumferential surface of the stator 61 are spaced apart.

It may be understood that the rotor 62 and the stator 61 are disposed at a spacing in the radial direction of the input shaft 21, or the rotor 62 and the stator 61 are disposed at a spacing in the axial direction of the input shaft 21. As positions of the control circuit board 30 and the reducer 20 are relatively fixed, and different relative position arrangement manners are set for the stator 61 and the rotor 62 of the position sensor 60, the position sensor 60 can be used in the electro-mechanical braking apparatus 100 in different scenarios and of different structures, and can implement reliable mounting and detection functions in various arrangement manners.

In an embodiment, still refer to FIG. 19. The separator plate 51 is provided with a through hole 511 that allows the input shaft 21 of the reducer 20 to penetrate, that is, the extension section 212 of the input shaft 21 of the reducer 20 can penetrate the through hole 511.

The reducer 20 includes an oil sealing member 23. An outer circumferential surface 231 of the oil sealing member 23 is attached to an inner circumferential surface 5111 of the through hole 511 to seal the through hole 511. In other words, in the radial direction of the input shaft 21, the oil sealing member 23 is sleeved between the rotor 62 and the through hole 511 of the separator plate 51, to achieve sealing effect on the through hole 511, thereby further improving separation effect between the reducer accommodating cavity 50a and the control circuit accommodating cavity 50b.

For example, as shown in FIG. 19, the stator 61 is arranged, at a spacing in the axial direction of the input shaft 21, on a side that is of the extension section 212 and that faces away from the brake motor 10, that is, the stator 61 is disposed on the control circuit board 30 in the control circuit accommodating cavity 50b. In this case, the oil sealing member 23 is sleeved on the periphery of the rotor 62, that is, in a radial direction of the extension section 212, the rotor 62 and the oil sealing member 23 are sequentially sleeved on the extension section 212, so that the through hole 511 of the separator plate 51 can be effectively sealed.

For example, the stator 61 is spaced apart on the periphery of the rotor 62 in the radial direction of the input shaft 21. In this case, the oil sealing member 23 is sleeved on a periphery of the input shaft 21, so that the reducer 20 and the position sensor 60 can be effectively separated.

It may be understood that the oil sealing member 23 is disposed between the input shaft 21 and the separator plate 51, or the oil sealing member 23 is disposed between the rotor 62 and the separator plate 51. This can effectively seal the through hole 511 of the separator plate 51, and avoid direct contact between the lubricating oil in the reducer 20 and the control circuit board 30 through the through hole 511, thereby ensuring that the control circuit board 30 reliably controls the brake motor 10. In addition, the oil sealing member 23 is disposed between the motor shaft 11 of the brake motor 10 and the separator plate 51, or the oil sealing member 23 is disposed between the rotor 62 and the separator plate 51. This can effectively seal the through hole 511 of the separator plate 51, and avoid direct contact between the lubricating oil in the reducer 20 and the position sensor 60, thereby ensuring detection precision of the position sensor 60 and improving a service life of the position sensor 60.

In an embodiment, FIG. 21 is a diagram of one side of a partial structure of the brake motor 10 of the electro-mechanical braking apparatus 100 according to an embodiment of this application. As shown in FIG. 21, in the axial direction of the input shaft 21, the control circuit board 30 is provided with a positioning hole 312, the positioning hole 312 runs through the control circuit board 30 in the thickness direction of the control circuit board 30, and the stator 61 is embedded in the positioning hole 312 of the control circuit board 30, to fixedly integrate the stator 61 onto the control circuit board 30.

In addition, a position of the positioning hole 312 is disposed in correspondence with a position of the rotor 62, so that the stator 61 embedded in the positioning hole 312 can work with the rotor 62 to implement a detection function of the position sensor 60.

In an embodiment, in the axial direction of the input shaft 21, a thickness H1 of the stator 61 is greater than a thickness H2 of the control circuit board 30. The stator 61 is embedded in the positioning hole 312 of the control circuit board 30. This can ensure that the stator 61 can cooperate with the rotor 62 to implement a detection function of the position sensor 60, and can reduce an overall thickness of the control circuit board 30 with the stator 61 assembled, thereby further improving an integration level between the stator 61 and the control circuit board 30, and further reducing internal space of the housing 50 occupied by the control circuit board 30.

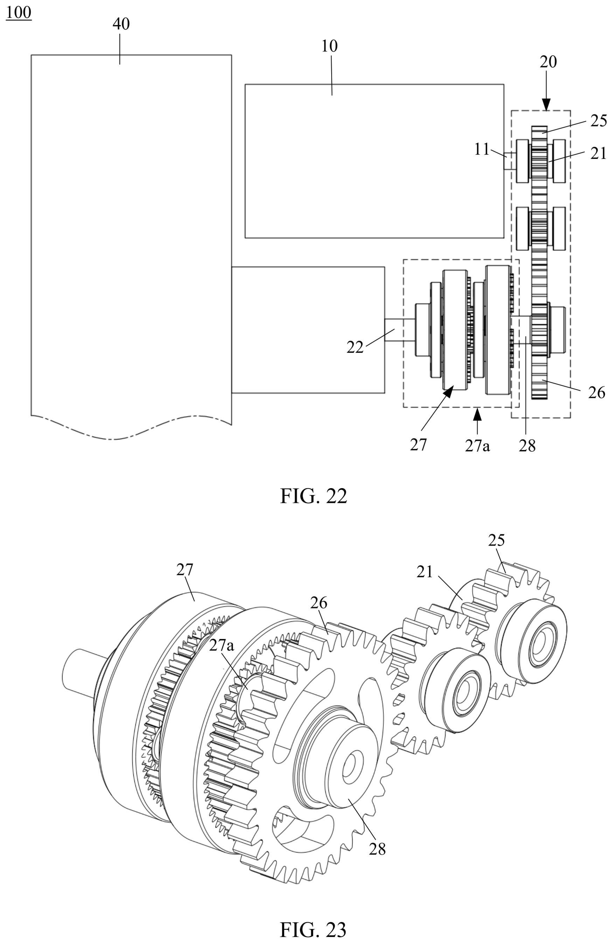

FIG. 22 is a diagram of one side of a planar structure of the electro-mechanical braking apparatus 100 according to an embodiment of this application. As shown in FIG. 22, the reducer 20 includes a motor gear 25 and an output wheel 27, the motor gear 25 is coaxially fastened to the input shaft 21, the motor gear 25 is in transmission connection to the output wheel 27, the output wheel 27 is configured to drive the output shaft 22 to rotate, and the motor gear 25 and the output wheel 27 are arranged on a side that is of the control circuit board 30 and that faces the brake motor 10.

In the electro-mechanical braking apparatus 100 provided in this application, the motor gear 25 and the output wheel 27 that are included in the reducer 20 are arranged on a same side of the control circuit board 30. This can not only reduce a length of a braking force transmission path in the electro-mechanical braking apparatus 100, but also help the electro-mechanical braking apparatus 100 utilize side space of the wheel of the vehicle 1000, thereby reducing occupied radial top space of the wheel of the vehicle 1000.

FIG. 23 is a diagram of one side of a shape structure of the reducer 20 of the electro-mechanical braking apparatus 100 according to an embodiment of this application.

As shown in FIG. 22 and FIG. 23, the reducer 20 includes the motor gear 25, a planetary input wheel 26, a planetary gear train 27a, and a planetary output wheel 27. The motor gear 25 is configured to be in transmission connection to the planetary input wheel 26, and the planetary input wheel 26 is in transmission connection to the planetary output wheel 27 by using the planetary gear train 27a. In an embodiment, the planetary output wheel 27 serves as the output wheel 27 of the reducer to drive the output shaft 22 to rotate or to be configured to drive the output shaft 22 to rotate. In an embodiment, the planetary output wheel 27 is configured to drive the output shaft 22 to rotate. The motor gear 25 and the planetary input wheel 26 are spaced apart in the arrangement direction of the input shaft 21 and the output shaft 22, and the planetary gear train 27a is arranged between the planetary input wheel 26 and the planetary output wheel 27 in an axial direction of the output shaft 22.

In the electro-mechanical braking apparatus 100 provided in this application, the reducer 20 can not only implement a large rotation speed ratio change in small space by using the planetary gear train 27a, but also enable the electro-mechanical braking apparatus 100 to more fully utilize side space of the wheel of the vehicle 1000 by arranging the planetary gear train 27a between the planetary input wheel 26 and the planetary output wheel 27, thereby reducing occupied radial top space of the wheel of the vehicle 1000.

In an embodiment, the motor gear 25 is in coaxial transmission connection to the input shaft 21. In the arrangement direction of the input shaft 21 and the output shaft 22, the motor gear 25 and the planetary input wheel 26 are spaced apart and are in transmission connection.

The motor shaft 11 of the brake motor 10 drives the motor gear 25 to rotate. As the motor gear 25 is in transmission connection to the planetary input wheel 26, the motor gear 25 synchronously drives the planetary input wheel 26 to rotate. The planetary input wheel 26 drives the planetary gear train 27a to rotate, and the planetary gear train 27a drives, by using the planetary output wheel 27, the output shaft 22 to rotate, so that power of the brake motor 10 can be transmitted to the brake 40, to enable the brake motor 10 to drive the brake 40 by using the reducer 20 to brake the vehicle 1000.

It may be understood that the planetary gear train 27a can implement a large rotation speed ratio change in small space, and an arrangement of the motor gear 25 and the planetary input wheel 26 helps transfer power of the brake motor 10 to the planetary output wheel 27.

In addition, as an axial size of the brake motor 10 is large, the brake motor 10 and the brake 40 are disposed side by side, so that axial sizes of the brake motor 10, the brake 40, and the planetary gear train 27a can overlap. With the arrangement of the reducer 20, a power transfer track similar to a "U" shape is formed between the brake motor 10 and the brake 40, and therefore a volume of the electro-mechanical braking apparatus 100 in this application is reduced along the motor shaft 11 of the brake motor 10. This properly utilizes radial space of the reducer 20.

In an embodiment, the motor gear 25 is coaxially fastened to the motor shaft 11 of the brake motor 10, and the planetary input wheel 26 is coaxially fastened to a gear shaft 28.

In this embodiment, the motor gear 25 is in transmission connection to the planetary input wheel 26, so that power of the brake motor 10 can be reliably transferred to the planetary gear train 27a, and a volume of the reducer 20 can be reduced.

In an embodiment, an axis of the planetary input wheel 26 coincides with an axis of the gear shaft 28. The planetary input wheel 26 is in transmission connection to the planetary gear train 27a by using the gear shaft 28. The planetary output wheel 27 is in transmission connection to the reversing mechanism 41 of the brake 40 by using the output shaft 22.

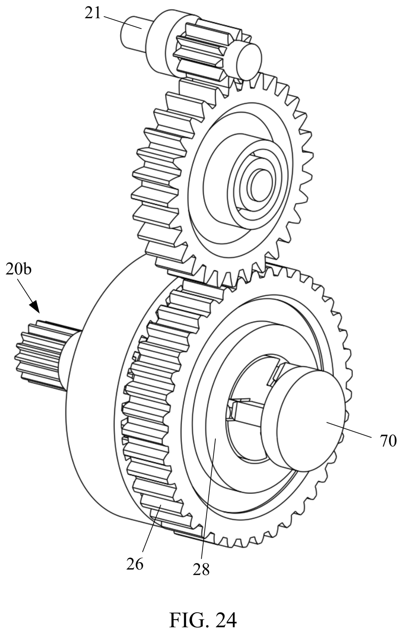

It may be understood that the planetary gear train 27a can implement a large rotation speed ratio change in small space, and an inner diameter of the planetary input wheel 26 is large, so that a lock actuator 70 (shown in FIG. 24) may be arranged in internal space of the planetary input wheel 26.

A motor, a mechanical transmission mechanism, and a brake in an electro-mechanical braking apparatus are usually independent components. As an integration level is not high, the electro-mechanical braking apparatus is too large to be arranged in a vehicle.

In this application, the electro-mechanical braking apparatus 100 controls the brake motor 10 by using the control circuit board 30, and the brake motor 10 drives the reducer 20 by using the motor shaft 11 of the brake motor 10 to rotate, to drive the brake 40 to brake the vehicle 1000. The brake motor 10 and the input shaft 21 of the reducer 20 perform coaxial transmission. The brake 40 and the output shaft 22 of the reducer 20 perform coaxial transmission. The brake motor 10 and the brake 40 are located on a same side of the reducer 20, so that the brake motor 10 can be adjacently arranged with the reversing mechanism 41 of the brake 40, to reduce an overall volume of the electro-mechanical braking apparatus 100.

In addition, in the electro-mechanical braking apparatus 100 in this application, the control circuit board 30 is further disposed on a side that is of the reducer 20 and that is away from the brake motor 10, and the control circuit board 30 is electrically connected to the brake motor 10 and is configured to control the motor shaft 11 of the brake motor 10 to rotate. With the foregoing arrangement, in the electro-mechanical braking apparatus 100 in this application, the control circuit board 30 is disposed on one side of the reducer 20, and the other side of the reducer 20 is configured to implement a transmission path from the brake motor 10 to the brake 40. In this application, the electro-mechanical braking apparatus 100 has a compact arrangement. This reduces an overall volume and has high transmission efficiency.

Further, the vehicle 1000 in this application is braked by using the electro-mechanical braking apparatus 100 provided in any one of the foregoing embodiments. The electro-mechanical braking apparatus 100 provided in this application has a small volume and high transmission efficiency, thereby saving internal space of the vehicle 1000 in this application, and improving reliability of the vehicle 1000. In other words, as the vehicle 1000 in this application is equipped with the electro-mechanical braking apparatus 100 provided in any one of the foregoing embodiments, the vehicle 1000 in this application has all possible beneficial effects of the electro-mechanical braking apparatus 100 provided in any one of the foregoing embodiments.

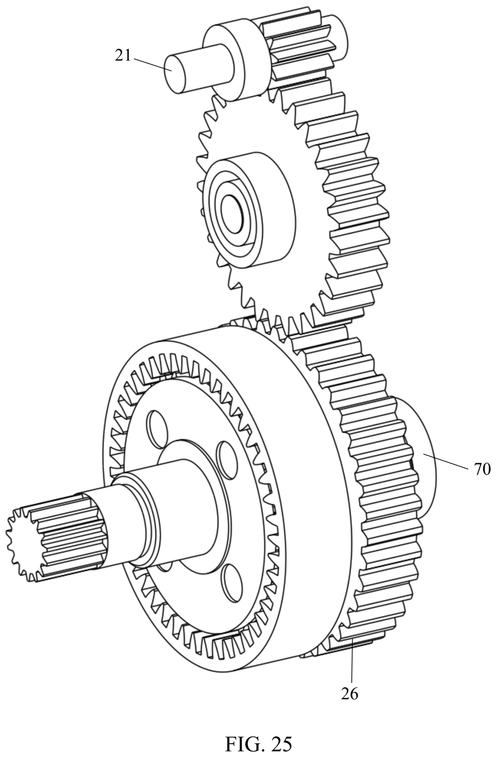

Refer to FIG. 24 and FIG. 25. FIG. 24 is a diagram of one side of a shape structure of the electro-mechanical braking apparatus 100 with a part of the structure according to an embodiment of this application. FIG. 25 is a diagram of another side of a structure of the electro-mechanical braking apparatus 100 with a part of the structure omitted according to the embodiment shown in FIG. 24 of this application.

In embodiments of this application, the electro-mechanical braking apparatus includes the lock actuator 70, and the lock actuator 70 is configured to lock or release a rotation action of the output wheel 27. As shown in FIG. 24 and FIG. 25, the lock actuator 70 is disposed, in the axial direction of the output shaft 22 of the reducer 20, at an end that is of the planetary input wheel 26 and that is close to the control circuit board 30, and the lock actuator 70 is configured to lock or release the gear shaft 28 of the planetary input wheel 26 to control the rotation action of the output wheel 27.

Specifically, in an axial direction of the gear shaft 28 of the planetary input wheel 26, the lock actuator 70 and the brake 40 are respectively located on two opposite sides of the gear shaft 28, that is, the brake 40 and the lock actuator 70 are oppositely arranged in the axial direction of the gear shaft 28.

It may be understood that, in an actual structure design of the electro-mechanical braking apparatus 100, to ensure effect of braking the vehicle 1000, the brake motor 10 usually needs to input power with high power to meet a braking requirement and braking strength. Therefore, both the brake motor 10 and the brake 40 have large volumes. The brake 40 and the brake motor 10 are disposed on one same side of the reducer 20, and the lock actuator 70 of a small volume is disposed on the other side of the reducer 20, to properly arrange the electro-mechanical braking apparatus 100 and reduce a volume.

Further, in the axial direction of the gear shaft 28, the gear shaft 28 extends toward the brake 40 and is in transmission connection to the brake 40, to drive the brake 40 to work, that is, serves as a power output shaft of the reducer 20 to output power of the brake motor 10 to the brake 40, to drive the brake 40 to act.

In other words, after the brake motor 10 inputs power to the reducer 20, the gear shaft 28 in the reducer 20 is driven to rotate around an axis of the gear shaft 28, to implement power transmission in the reducer 20, so that the power inputted by the brake motor 10 can be outputted to the brake 40 by using the reducer 20, to drive the brake 40 to work.

The lock actuator 70 is configured to lock or release the gear shaft 28, and may control a transmission function of the reducer 20, so that the electro-mechanical braking apparatus 100 in this application further has a parking function. For example, the lock actuator 70 can lock the gear shaft 28 to achieve lock-up effect on the gear shaft 28, to lock power transfer of the brake motor 10 in the reducer 20 to lock a working state of the brake 40, so that the electro-mechanical braking apparatus 100 works in a parking brake mode.

In this specification of this application, the braking process in which the lock actuator 70 locks the working state of the brake 40 is defined as that the electro-mechanical braking apparatus 100 in this application works in the parking brake mode.

It needs to be noted that, in embodiments shown in FIG. 24 and FIG. 25 of this application, only an example in which the gear shaft 28 is a transmission shaft of the reducer 20 and the lock actuator 70 is disposed opposite to the brake 40 in the axial direction of the gear shaft 28 is used for description, but an arrangement position of the lock actuator 70 is not limited thereto. In another embodiment of this application, the arrangement position of the lock actuator 70 may be adjusted based on an actual design requirement and a braking requirement of the vehicle 1000. This is not specifically limited in this application.

In other words, the lock actuator 70 is configured to lock a power transmission process of the brake motor 10 in the reducer 20. For the power transmission process of the brake motor 10 in the entire reducer 20, only the lock actuator 70 needs to lock the power transmission process. The reducer 20 has several stages of transmission in the direction perpendicular to the motor shaft 11 of the brake motor 10. In this case, the lock actuator 70 may be in transmission connection to a gear shaft at any stage of transmission in the reducer 20, and may lock the gear shaft to lock power transmission of the brake motor 10 in the reducer 20.

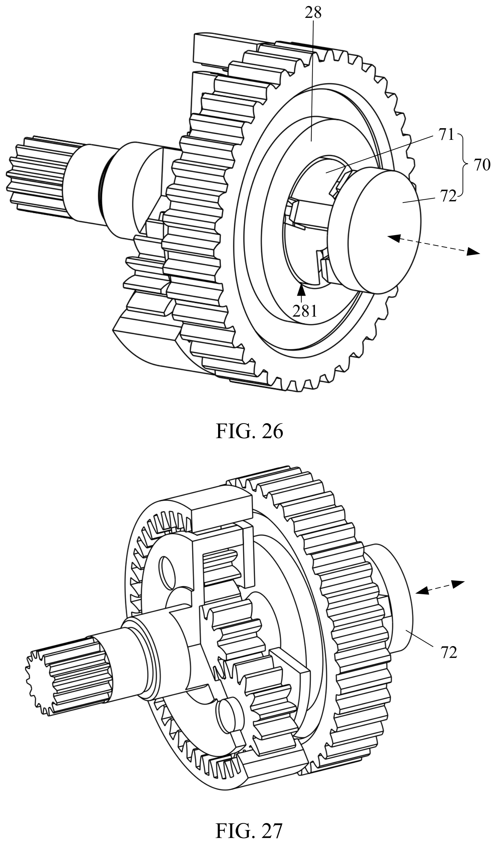

Refer to FIG. 26 and FIG. 27 together. FIG. 26 is a diagram of one side of a shape structure of the electro-mechanical braking apparatus 100 with a part of the structure omitted according to an embodiment of this application. FIG. 27 is a diagram of another side of a shape structure of the electro-mechanical braking apparatus 100 with a part of the structure omitted according to the embodiment shown in FIG. 26 of this application.

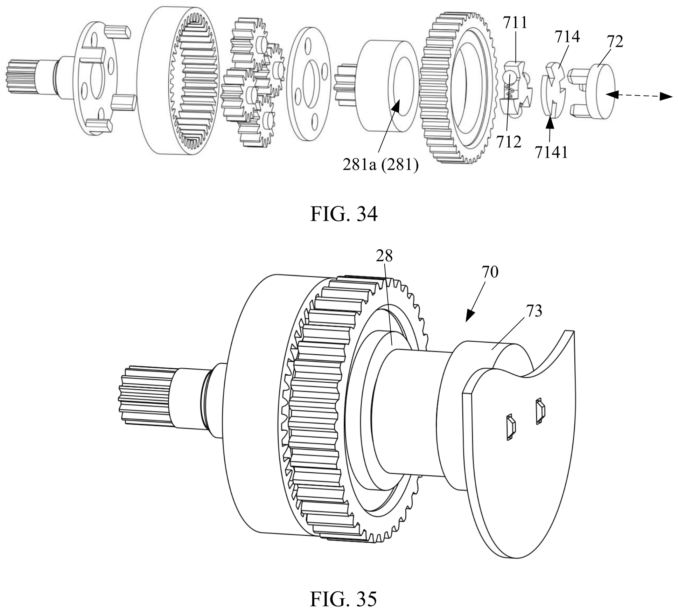

As shown in FIG. 26 and FIG. 27, the lock actuator 70 includes a clutch 71 and a lock motor 73 (shown in FIG. 35), and the lock motor 73 is configured to control the clutch 71 to lock or release the gear shaft 28. The control circuit board 30 is configured to fasten a control circuit of the lock motor 73. The control circuit of the lock motor 73 is configured to output an alternating current to drive the lock motor 73. The lock motor 73 is arranged between the control circuit board 30 and the output shaft 22 in an axial direction of the lock motor 73.

In the electro-mechanical braking apparatus 100 provided in this application, the lock motor 73 is arranged in a gap between the output shaft 22 and the control circuit board 30, so that occupied side space of the wheel of the vehicle 1000 can be reduced.

In an implementation, the lock actuator further includes an axial moving member 72. The lock motor 73 is configured to drive the axial moving member 72 to move away from or move toward the clutch 71, to control the clutch 71 to lock or release the gear shaft 28. In an embodiment, the clutch 71 is accommodated in a shaft hole (that is, an inner hole 281) of the gear shaft 28, the axial moving member 72 is configured to move relative to the clutch 71 in the axial direction of the gear shaft 28 and control the clutch 71 to lock or release the gear shaft 28, and the lock motor 73 is configured to drive the axial moving member 72 to move away from or move toward the clutch 71 (a movable direction of the axial moving member 72 is shown by a dashed arrow in the figure).

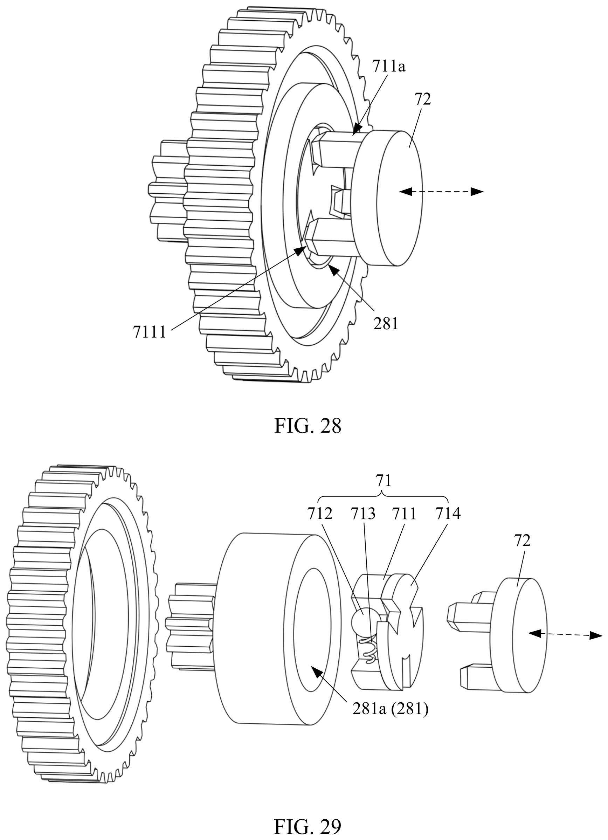

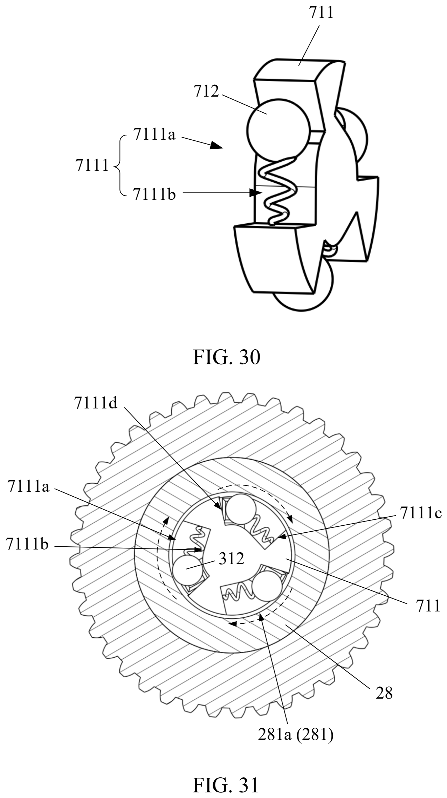

Specifically, refer to FIG. 28 to FIG. 30 together. FIG. 28 is a diagram of one side of a shape structure of the electro-mechanical braking apparatus 100 with a part of the structure omitted according to the embodiment shown in FIG. 26 of this application. FIG. 29 is a diagram of one side of an exploded structure of the electro-mechanical braking apparatus 100 with a part of the structure omitted according to the embodiment shown in FIG. 28 of this application. FIG. 30 is a diagram of one side of a shape structure of the clutch 71 of the electro-mechanical braking apparatus 100 with a part of the structure omitted according to the embodiment shown in FIG. 29 of this application.

As shown in FIG. 28 and FIG. 30, in the axial direction of the gear shaft 28, the lock actuator 70 is disposed at an end that is of the gear shaft 28 and that faces away from the brake 40. The inner hole 281 is provided at an end that is of the gear shaft 28 and that faces the lock actuator 70. The inner hole 281 extends in the axial direction of the gear shaft 28 from the gear shaft 28 to an end that faces away from the lock actuator 70, and an inner wall of the inner hole 281 is constructed as an inner circumferential surface 281a of the inner hole 281. In other words, around the axis of the gear shaft 28, the inner circumferential surface 281a of the inner hole 281 forms an accommodating cavity at an end that is of the gear shaft 28 and that faces the lock actuator 70, so that the clutch 71 can be accommodated in the inner hole 281.

It may be understood that the clutch 71 is accommodated in the inner hole 281, so that the clutch 71 can implement, inside the gear shaft 28, a locking or releasing action on the gear shaft 28, without a need to design separate structural space on a periphery of the gear shaft 28 for arranging the clutch 71, and an internal structure design of the electro-mechanical braking apparatus 100 can be simplified based on structural features of the gear shaft 28. In this way, a volume occupied by the lock actuator 70 can be reduced to reduce an overall volume of the electro-mechanical braking apparatus 100. In the electro-mechanical braking apparatus 100 provided in this application, the clutch 71 is arranged in the shaft hole of the gear shaft 28 of the planetary input wheel 26, so that occupied side space of the wheel of the vehicle 1000 can be reduced.

Refer to FIG. 31 together with FIG. 30. FIG. 31 is a diagram of one side of a cross-sectional structure of the electro-mechanical braking apparatus 100 with a part of the structure omitted according to the embodiment shown in FIG. 28 of this application. As shown in FIG. 30 and FIG. 31, the clutch 71 includes an inner gear 711 and a movable member 712. The inner gear 711 is coaxially fastened to the shaft hole of the gear shaft 28 of the planetary input wheel 26, a groove 7111 is provided on an outer circumferential surface of the inner gear 711, an opening 7111a of the groove 7111 faces an inner circumferential surface of the shaft hole of the gear shaft 28 of the planetary input wheel 26, and a groove depth of the groove 7111 gradually decreases in a circumferential direction of the shaft hole of the gear shaft 28 of the planetary input wheel 26. The movable member 712 is configured to move in the groove 7111 in the circumferential direction of the shaft hole of the gear shaft 28 of the planetary input wheel 26.

Specifically, the inner gear 711 and the gear shaft 28 are coaxially fastened, so that when the gear shaft 28 rotates around the axis of the gear shaft 28, the inner gear 711 may be synchronously driven to rotate around the axis of the gear shaft 28, thereby implementing a function of the clutch 71 to rotate synchronously with the gear shaft 28.

The groove 7111 is provided on the outer circumferential surface 711a of the inner gear 711. The movable member 712 is disposed in the groove 7111 and can move in the groove 7111 in the circumferential direction of the gear shaft 28. The movable member 712 in the groove 7111 can move in the circumferential direction of the gear shaft 28, so that a function of locking or releasing the gear shaft 28 by the clutch 71 can be implemented.

Specifically, the inner gear 711 includes at least two grooves 7111, a quantity of the movable members 712 is the same as a quantity of the grooves 7111, and each groove 7111 is provided to accommodate one movable member 712. The at least two grooves 7111 are provided at equal spacings in a circumferential direction of the inner gear 711, and a minimum groove depth end of one of two adjacent grooves 7111 is close to a maximum groove depth end of the other groove 7111 in the circumferential direction of the inner gear.

As shown in FIG. 30 and FIG. 31, the groove 7111 extends in the circumferential direction of the inner gear 711, and the groove 7111 includes the opening 7111a and a bottom wall 7111b that are opposite to each other in a radial direction of the inner gear 711.

In the radial direction of the inner gear 711, the opening 7111a of the groove 7111 is closer to the inner circumferential surface 281a of the inner hole 281 of the gear shaft 28 than the bottom wall 7111b. In other words, the opening 7111a of the groove 7111 faces the inner circumferential surface 281a of the inner hole 281 of the gear shaft 28, and compared with the opening 7111a, the bottom wall 7111b is located, in the radial direction of the inner gear 711, on a side that is of the groove 7111 and that is away from the inner hole 281.

Further, as shown in FIG. 31, in the radial direction of the inner gear 711, a relative distance between the opening 7111a and the bottom wall 7111b is the groove depth of the groove 7111, and the groove depth of the groove 7111 gradually decreases in the circumferential direction of the gear shaft 28, that is, in the circumferential direction of the inner gear 711, the relative distance between the opening 7111a and the bottom wall 7111b gradually decreases.

It may be understood that the bottom wall 7111b of the groove 7111 is the outer circumferential surface 711a of the inner gear 711 corresponding to a position of the groove 7111. The opening 7111a of the groove 7111 is a gap formed on the outer circumferential surface 711a of the inner gear 711 at the position corresponding to the groove 7111. The relative distance between the opening 7111a and the bottom wall 7111b may be understood as a relative distance between the bottom wall 7111b of the groove 7111 and the outer circumferential surface 711a that is of the inner gear 711 and that is close to the inner hole 281 in the radial direction of the inner gear 711.

The clutch 71 is accommodated in the inner hole 281 of the gear shaft 28, and the movable member 712 in the groove 7111 can move in the circumferential direction of the gear shaft 28. Therefore, when the groove depth of the groove 7111 set by the clutch 71 changes, a relative distance between the movable member 712 in the radial direction of the gear shaft 28 and the inner circumferential surface 281a of the inner hole 281 of the gear shaft 28 can be changed, and then a magnitude of a contact force generated between the movable member 712 and the inner circumferential surface 281a of the inner hole 281 when the movable member 712 moves in the groove 7111 is changed.

When contact forces of different magnitudes are generated between the movable member 712 and the inner circumferential surface 281a of the inner hole 281, friction forces of different magnitudes are generated, so that the lock actuator 70 generates different braking states for the gear shaft 28, that is, the lock actuator 70 can lock or release the gear shaft 28.

For example, in a possible embodiment, when the movable member 712 moves in the groove 7111 in the circumferential direction of the inner gear 711 to a position with a large groove depth, the movable member 712 and the inner circumferential surface 281a of the inner hole 281 of the gear shaft 28 are separated or have a small contact force, so that the gear shaft 28 can rotate in the reducer 20 and implement a transmission function of the reducer 20. In this way, the brake motor 10 drives the brake 40 by using the reducer 20 to brake the vehicle 1000, so that the electro-mechanical braking apparatus 100 can work in a service brake mode, or the brake motor 10 runs in a reverse direction to drive the brake 40 by using the reducer 20 to cancel braking on the vehicle 1000.

For example, in a possible embodiment, when the movable member 712 moves in the groove 7111 to a position with a small groove depth, a contact force between the movable member 712 and the inner circumferential surface 281a of the inner hole 281 of the gear shaft 28 is large, and a friction force between the gear shaft 28 and the movable member 712 increases correspondingly, so that the gear shaft 28 cannot rotate in the reducer 20, and then a function of the lock actuator 70 to lock the gear shaft 28 is implemented. In this case, a transmission function of the reducer 20 is suspended, so that the electro-mechanical braking apparatus 100 in this application can work in a parking brake mode.

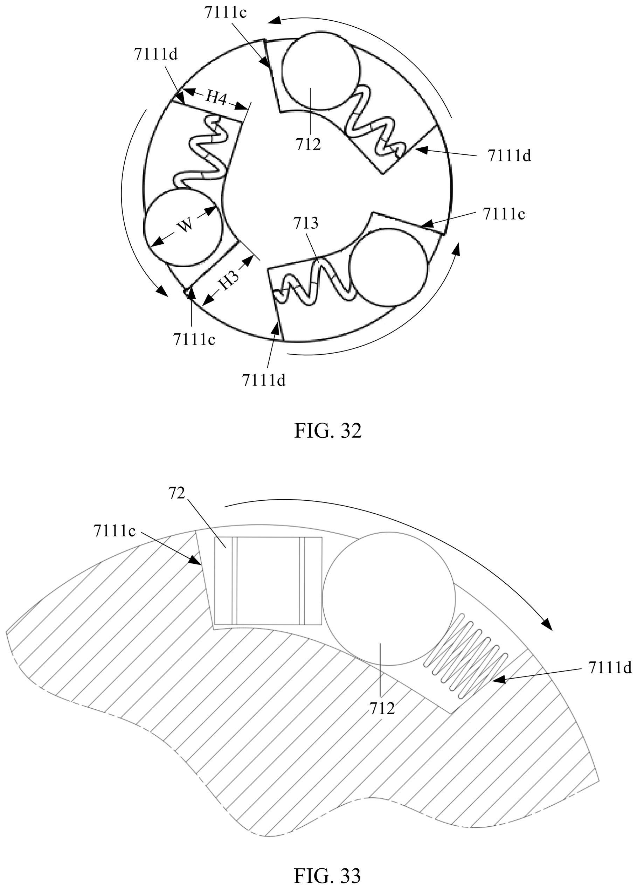

For example, refer to FIG. 32 together with FIG. 31. FIG. 32 is a diagram of one side of a cross-sectional structure of the clutch 71 of the electro-mechanical braking apparatus 100 with a part of the structure omitted according to the embodiment shown in FIG. 31 of this application. As shown in FIG. 31 and FIG. 32, in the circumferential direction of the gear shaft 28, the groove 7111 has a first end 7111c and a second end 7111d that are opposite to each other.

The groove 7111 has a first groove depth H3 at the first end 7111c, the groove 7111 has a second groove depth H4 at the second end 7111d, and the first groove depth H3 is greater than the second groove depth H4. In addition, the first groove depth H3 is a maximum groove depth of the groove 7111, and the second groove depth H4 is a minimum groove depth of the groove 7111.

As shown in FIG. 31, when the movable member 712 moves in the groove 7111 from the first end 7111c to the second end 7111d in the circumferential direction of the gear shaft 28 (as shown by the dashed curve arrow in FIG. 31), as the groove depth of the groove 7111 gradually decreases from the first end 7111c to the second end 7111d, when the movable member 712 moves toward the second end 7111d, a contact force between the movable member 712 and the inner circumferential surface 281a of the inner hole 281 of the gear shaft 28 gradually increases, and a friction force between the movable member 712 and the inner hole 281 synchronously increases, so that the gear shaft 28 cannot rotate, that is, a function of locking the gear shaft 28 by the lock actuator 70 can be implemented.

As shown in FIG. 32, when the movable member 712 moves in the groove 7111 from the second end 7111d to the first end 7111c in the circumferential direction of the gear shaft 28 (as shown by the solid curve arrow in FIG. 32), as the groove depth of the groove 7111 gradually increases from the second end 7111d to the first end 7111c, when the movable member 712 moves toward the first end 7111c, a contact force between the movable member 712 and the inner circumferential surface 281a of the inner hole 281 of the gear shaft 28 gradually decreases, and a friction force between the movable member 712 and the inner hole 281 gradually decreases, that is, the movable member 712 is gradually separated from the inner circumferential surface 281a of the inner hole 281, so that locking on the gear shaft 28 by the lock actuator 70 is released, that is, the lock actuator 70 releases the gear shaft 28, so that the gear shaft 28 can rotate around the axis of the gear shaft 28.

It needs to be noted that, in embodiments shown in FIG. 31 and FIG. 32, only an example in which the movable member 712 is located at the first end 7111c and the movable member 712 is located at the second end 7111d is used for description, but this application is not limited to that the movable member 712 is located at the first end 7111c or the second end 7111d to correspondingly implement a function of locking or releasing the gear shaft 28 by the lock actuator 70.

In other words, the movable member 712 moves in the groove 7111 to different positions, to abut against the inner circumferential surface 281a of the inner gear 711 with different contact forces and friction forces, so that locking effect of different degrees can be achieved on the gear shaft 28.

In an embodiment, in the circumferential direction of the inner gear 711, at least two grooves 7111 arranged at equal spacings are provided on the outer circumferential surface 711a of the inner gear 711, and one movable member 712 that can move in the circumferential direction of the inner gear 711 is disposed in each corresponding groove 7111. As shown in FIG. 32, a minimum groove depth end of one of two adjacent grooves 7111 is close to a maximum groove depth end of the other groove 7111 in the circumferential direction of the inner gear 711.

For example, as shown in FIG. 32, in the circumferential direction of the inner gear 711, a first end 7111c of a groove 7111 is closer to a second end 7111d of another adjacent groove 7111, instead of a second end 7111d of the groove 7111. In other words, all groove depths of the grooves 7111 of the inner gear 711 gradually decrease in the same circumferential direction of the inner gear 711.

It may be understood that the at least two grooves 7111 are provided at equal spacings in the circumferential direction of the inner gear 711, and minimum groove depth ends of the grooves 7111 are located on same sides of the grooves 7111 in the circumferential direction of the inner gear 711, so that the movable members 712 can move in a same rotation direction in the circumferential direction of the inner gear 711, and produce a synchronous contact force change on the inner circumferential surface 281a of the inner hole 281 of the gear shaft 28. This facilitates locking or releasing of the gear shaft 28 by the clutch 71.

In an embodiment, a minimum groove depth of each groove 7111 is less than a length of the movable member 712 in the radial direction of the inner gear 711.

Specifically, as shown in FIG. 32, corresponding to the movable member 712 in each groove 7111, the movable member 712 has a maximum outer diameter W in the radial direction of the inner gear 711. In the embodiment shown in FIG. 32, the movable member 712 is a sphere, and the maximum outer diameter W of the movable member 712 may be understood as a diameter of the movable member 712.

The minimum groove depth of the groove 7111 is less than the maximum outer diameter W of the corresponding movable member 712, that is, the second groove depth H4 of the groove 7111 is less than the maximum outer diameter W of the movable member 712.

A minimum groove depth of each groove 7111 is set to be less than the length of the movable member 712 in the radial direction of the inner gear 711, that is, the second groove depth H4 of the groove 7111 is set to be less than the maximum outer diameter W of the movable member 712. This can ensure that when each movable member 712 moves in the corresponding groove 7111 to the minimum groove depth end, a reliable contact force and a reliable friction force are generated between the movable member 712 and the inner circumferential surface 281a of the inner hole 281, to ensure locking effect and locking reliability on the gear shaft 28 by the lock actuator 70.

In an embodiment, a maximum groove depth of each groove 7111 is greater than a length of the movable member 712 in the radial direction of the inner gear 711.

Specifically, as shown in FIG. 32, corresponding to the movable member 712 in each groove 7111, in the radial direction of the inner gear 711, the maximum groove depth of the groove 7111 is greater than the maximum outer diameter W of the corresponding movable member 712, that is, the first groove depth H3 of the groove 7111 is greater than the maximum outer diameter W of the movable member 712.

A maximum groove depth of each groove 7111 is set to be greater than the length of the movable member 712 in the radial direction of the inner gear 711. This can ensure that when each movable member 712 moves in the corresponding groove 7111 to the maximum groove depth end, the movable member 712 is separated from the inner circumferential surface 281a of the inner hole 281, so that the lock actuator 70 can completely release the gear shaft 28, to ensure effect and stability of the gear shaft 28 rotating around the axis of the gear shaft 28.

It needs to be noted that, in the embodiment shown in FIG. 32, only an example in which a structural shape of the movable member 712 is a sphere is used for description, but embodiments of this application are not limited to that the structural shape of the movable member 712 can be set only to the sphere. In other words, in another embodiment of this application, the movable member 712 may be configured to be of another structure, and a specific structural shape and structural size may be adjusted based on an actual design requirement.

In an embodiment, refer to FIG. 32 together with FIG. 28. The clutch 71 includes an elastic member 713 of the clutch 71. The elastic member 713 of the clutch 71 is configured to cooperate with the axial moving member 72 to drive the movable member 712 to move back and forth in the circumferential direction of the inner gear 711. In other words, the elastic member 713 of the clutch 71 may be configured to drive the movable members 712 to move synchronously in the groove 7111, and rotation directions of the movable members 712 are the same.

Specifically, as shown in FIG. 28, in the axial direction of the gear shaft 28, the axial moving member 72 moves relative to the inner gear 711, and at least a part of the axial moving member 72 may extend into the groove 7111 in the axial direction of the inner gear 711.

The elastic member 713 of the clutch 71 is disposed in the groove 7111 of the inner gear 711 and extends in the circumferential direction of the inner gear 711.

The elastic member 713 of the clutch 71 is elastically connected between the movable member 712 and the inner gear 711. In other words, one end of the elastic member 713 of the clutch 71 is connected to the movable member 712, and the other end of the elastic member 713 is connected to a side wall of the groove 7111 in the circumferential direction of the inner gear 711, so that the elastic member 713 of the clutch 71 can cooperate with the axial moving member 72 to drive the movable member 712 to move back and forth in the circumferential direction of the inner gear 711, to implement an action of locking or releasing the gear shaft 28 by the lock actuator 70.

In an embodiment, when the axial moving member 72 moves away from the clutch 71, the elastic member 713 of the clutch 71 is configured to drive the movable member 712 to move counterclockwise (as shown by the solid curve arrow in FIG. 32) in the circumferential direction of the inner gear 711.

For example, as shown in FIG. 32, one end of the elastic member 713 of the clutch 71 is connected to a side wall at the second end 7111d of the groove 7111, and the other end of the elastic member 713 is connected to the movable member 712.

When the axial moving member 72 moves away from the clutch 71 in the axial direction of the gear shaft 28, which may also be understood as that the axial moving member 72 and the clutch 71 are in a separated state, the elastic member 713 of the clutch 71 can drive the movable member 712 to move in the circumferential direction of the inner gear 711 from the second end 7111d of the groove 7111 to the first end 7111c of the groove 7111, that is, the movable member 712 moves counterclockwise in the circumferential direction of the inner gear 711.

In the embodiment shown in FIG. 32, the groove depth of the first end 7111c of the groove 7111 is greater than the groove depth of the second end 7111d of the groove 7111, and the elastic member 713 of the clutch 71 drives the movable member 712 to move in a direction in which the groove depth of the groove 7111 gradually increases. In this case, the contact force between the movable member 712 and the inner circumferential surface 281a of the inner hole 281 gradually decreases, and the friction force between the movable member 712 and the inner circumferential surface 281a also gradually decreases until the friction force disappears, so that the lock actuator 70 releases the gear shaft 28, and then the gear shaft 28 can rotate around the axis of the gear shaft 28.

It needs to be noted that, in the embodiment shown in FIG. 32, only an example in which when the axial moving member 72 moves away from the clutch 71, the elastic member 713 of the clutch 71 is configured to drive the movable member 712 to move counterclockwise in the circumferential direction of the inner gear 711 is used for description, but embodiments of this application are not limited to that the movable member 712 can move only counterclockwise in the circumferential direction of the inner gear 711 when the axial moving member 72 moves away from the clutch 71.

In other words, when the axial moving member 72 moves away from the clutch 71, a direction in which the movable member 712 moves, driven by the elastic member 713 of the clutch 71, in the circumferential direction of the inner gear 711 may be changed based on actual arrangement positions of the movable member 712 and the elastic member 713 of the clutch 71 in the groove 7111.

For example, in a possible embodiment, when the axial moving member 72 moves away from the clutch 71, the elastic member 713 of the clutch 71 may alternatively be configured to drive the movable member 712 to move clockwise in the circumferential direction of the inner gear 711.

For example, refer to FIG. 33. FIG. 33 is a diagram of one side of a partial cross-sectional structure of the lock actuator 70 of the electro-mechanical braking apparatus 100 with a part of the structure omitted according to the embodiment shown in FIG. 31 of this application. As shown in FIG. 33, when the axial moving member 72 moves toward the clutch 71 in the axial direction of the gear shaft 28, and at least a part of the axial moving member 72 extends into the groove 7111 of the inner gear 711, the axial moving member 72 extends into the groove 7111 from a side that is of the movable member 712 and that faces away from the elastic member 713 of the clutch 71.

The axial moving member 72 occupies some space of the groove 7111 after extending into the groove 7111. In this case, the axial moving member 72 abuts against the movable member 712 and synchronously drives the movable member 712 to move in the circumferential direction of the inner gear 711 from the first end 7111c of the groove 7111 to the second end 7111d of the groove 7111, that is, the axial moving member 72 drives the movable member 712 to move clockwise in the circumferential direction of the inner gear 711.

In the embodiment shown in FIG. 33, the groove depth of the first end 7111c of the groove 7111 is greater than the groove depth of the second end 7111d of the groove 7111, and the axial moving member 72 abuts against and drives the movable member 712 to move in a direction in which the groove depth of the groove 7111 gradually decreases. In this case, the contact force between the movable member 712 and the inner circumferential surface 281a of the inner hole 281 gradually increases, and the friction force between the movable member 712 and the inner circumferential surface 281a also gradually increases, so that the gear shaft 28 cannot rotate around the axis of the gear shaft 28, and then the lock actuator 70 can lock the gear shaft 28.

It needs to be noted that, in the embodiment shown in FIG. 33, only an example in which the axial moving member 72 moves toward the clutch 71 to drive the movable member 712 to move clockwise in the circumferential direction of the inner gear 711 is used for description, but embodiments of this application are not limited to that the movable member 712 can move only clockwise in the circumferential direction of the inner gear 711 when the axial moving member 72 moves toward the clutch 71.

In other words, when the axial moving member 72 moves toward the clutch 71, a direction in which the movable member 712 is driven to move in the circumferential direction of the inner gear 711 may be changed based on actual arrangement positions of the movable member 712 and the elastic member 713 of the clutch 71 in the groove 7111.

For example, in a possible embodiment, when the axial moving member 72 moves toward the clutch 71, the movable member 712 is driven to move counterclockwise in the circumferential direction of the inner gear 711.

It may be understood that, as shown in FIG. 33, the axial moving member 72 extends into the groove 7111 to synchronously drive the movable member 712 to squeeze the elastic member 713 of the clutch 71. In this case, the elastic member 713 of the clutch 71 is in a squeezed state and stores elastic potential energy. After the axial moving member 72 moves away from the clutch 71 and extends out of the groove 7111, the elastic member 713 of the clutch 71 releases the elastic potential energy and drives the movable member 712 to move in the circumferential direction of the inner gear 711, that is, the movable member 712 can be driven to move back and forth in the circumferential direction of the inner gear 711 through cooperation between the axial moving member 72 and the elastic member 713 of the clutch 71.

FIG. 34 is a diagram of one side of an exploded structure of the lock actuator 70 of the electro-mechanical braking apparatus 100 with a part of the structure omitted according to the embodiment shown in FIG. 29 of this application.

As shown in FIG. 34, the clutch 71 includes an end cover 714. The end cover 714 may be configured to cover the groove 7111 and limit a sliding track of the movable member 712 in the groove 7111. The end cover 714 is disposed in the axial direction of the gear shaft 28 on a side that is of the inner gear 711 and that is close to the lock motor 73, and the end cover 714 is attached to the inner gear 711. This can limit movement of the movable member 712 in the groove 7111 in the axial direction of the gear shaft 28, so that the movable member 712 moves in the circumferential direction of the inner gear 711, thereby improving locking effect and locking reliability on the gear shaft 28 by the lock actuator 70.

In an embodiment, an end surface that is of the end cover 714 and that faces the lock motor 73 includes a fitting opening 7141, the fitting opening 7141 is in communication with the groove 7111 in the axial direction of the gear shaft 28, and the axial moving member 72 penetrates the fitting opening 7141 to drive the movable member 712.

Specifically, as shown in FIG. 34, in the axial direction of the gear shaft 28, the end cover 714 has two opposite end surfaces, where one end surface is attached to the inner gear 711, and the other end surface is provided with the fitting opening 7141. The fitting opening 7141 runs through the end cover 714 in the axial direction of the gear shaft 28, which may also be understood as that the fitting opening 7141 runs through the two opposite end surfaces of the end cover 714.

A quantity of the fitting openings 7141 is the same as a quantity of the grooves 7111, and a position of each fitting opening 7141 corresponds to a position of each groove 7111 on the inner gear, so that at least a part of the axial moving member 72 can penetrate the end cover 714 from the fitting opening 7141 and extend into the corresponding groove 7111 on the inner gear 711, and then can drive the movable member 712 to move in the circumferential direction of the inner gear 711.

In other words, the end cover 714 is provided with the fitting opening 7141 facing the lock motor 73, so that the axial moving member 72 can penetrate the fitting opening 7141 to drive the movable member 712 to move.

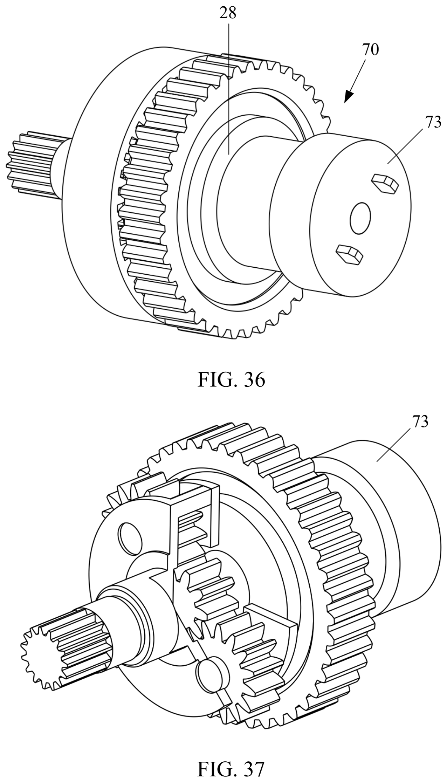

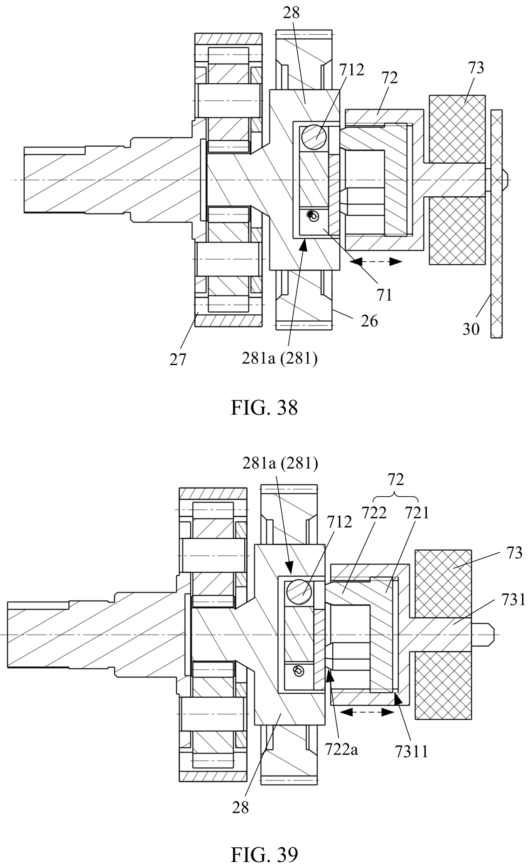

In an embodiment, refer to FIG. 35 to FIG. 38. FIG. 35 is a diagram of one side of a shape structure of the electro-mechanical braking apparatus 100 with a part of the structure omitted according to an embodiment of this application. FIG. 36 is a diagram of another side of a shape structure of the electro-mechanical braking apparatus 100 with a part of the structure omitted according to the embodiment shown in FIG. 35 of this application. FIG. 37 is a diagram of still another side of a shape structure of the electro-mechanical braking apparatus 100 with a part of the structure omitted according to the embodiment shown in FIG. 35. FIG. 38 is a diagram of one side of a cross-sectional structure of the electro-mechanical braking apparatus 100 with a part of the structure omitted according to the embodiment shown in FIG. 35 of this application.

As shown in FIG. 35 to FIG. 38, the lock motor 73 is disposed in the axial direction of the gear shaft 28 on a side that is of the gear shaft 28 and that faces away from the brake 40. In other words, in the axial direction of the gear shaft 28, the lock motor 73 is disposed on a side that is of the axial moving member 72 and that faces away from the clutch 71, and the lock motor 73 is in transmission connection to the axial moving member 72 and is configured to drive the axial moving member 72 to move in the axial direction of the gear shaft 28, to provide a driving force for the lock actuator 70 to lock or release the gear shaft 28.

In an embodiment, in the axial direction of the gear shaft 28, the axial moving member 72 is located between the clutch 71 and the lock motor 73, and axes of the lock motor 73, the axial moving member 72, the clutch 71, and the gear shaft 28 coincide. It may be understood that the axes of the lock motor 73, the axial moving member 72, the clutch 71, and the gear shaft 28 coincide. This helps evenly distribute power outputted by the lock motor 73 to the grooves 7111 of the inner gear 711.

In an embodiment, refer to FIG. 39 together with FIG. 34. FIG. 39 is a diagram of one side of a cross-sectional structure of the electro-mechanical braking apparatus 100 with a part of the structure omitted according to an embodiment of this application. As shown in FIG. 34 and FIG. 39, the axial moving member 72 includes a transmission portion 721 and a pushing portion 722. The transmission portion 721 is configured to be in transmission connection to a motor shaft 731 of the lock motor 73 and move along the motor shaft 731 of the lock motor 73 as the motor shaft 731 of the lock motor 73 rotates. The pushing portion 722 is configured to receive a driving force of the pushing portion to move along the motor shaft 731 of the lock motor 73 and drive the movable member 712.

Specifically, as shown in FIG. 39, in an axial direction of the motor shaft 731 of the lock motor 73, the pushing portion 722 is located between the transmission portion 721 and the movable member 712, the pushing portion 722 is in fixed connection to the transmission portion 721, and the transmission portion 721 is in transmission connection to the motor shaft 731 of the lock motor 73 and is configured to convert a rotation motion of the motor shaft 731 of the lock motor 73 to movement in the axial direction of the motor shaft 731 of the lock motor 73.

When the motor shaft 731 of the lock motor 73 rotates around the axis of the motor shaft 731, the motor shaft 731 of the lock motor 73 synchronously drives the transmission portion 721 to move in the axial direction of the motor shaft 731 of the lock motor 73, so that the transmission portion 721 drives the pushing portion 722 to move in the axial direction of the motor shaft 731 of the lock motor 73, and then in the axial direction of the gear shaft 28, the axial moving member 72 can move toward the clutch 71 or move away from the clutch 71.

In other words, the transmission portion 721 of the axial moving member 72 is configured to convert a rotation motion of the motor shaft 731 of the lock motor 73 to movement of the pushing portion 722 in the axial direction of the motor shaft 731 of the lock motor 73, to implement cooperative movement of the pushing portion 722 and the movable member 712.

In an embodiment, an end that is of the pushing portion 722 and that faces the clutch 71 includes a fitting slope 722a, and a tilt direction of the fitting slope 722a intersects the axial direction of the motor shaft 731 of the lock motor 73. It may be understood that, with cooperation between the fitting slope 722a and the movable member 712, a pushing force applied by the pushing portion 722 on the movable member 712 can be reduced, thereby reducing power of the lock motor 73 and reducing a volume of the lock motor 73.

In addition, the fitting slope 722a is provided at an end that is of the pushing portion 722 and that faces the clutch 71, so that when the pushing portion 722 extends into the groove 7111, it is easier to push the movable member 712 to move in the circumferential direction of the inner gear 711, thereby improving locking stability and locking effect of the lock actuator 70.

In an embodiment, in the axial direction of the gear shaft 28, a transmission hole 7311 is provided at an end that is of the motor shaft 731 of the lock motor 73 and that faces the clutch 71, the transmission hole 7311 is sleeved on a periphery of the transmission portion 721, and the transmission portion 721 may move in the transmission hole 7311 in the axial direction of the gear shaft 28.

An inner circumferential surface of the transmission hole 7311 is provided with an internal thread extending in the axial direction of the motor shaft 731 of the lock motor 73, and an outer circumferential surface of the transmission portion 721 is provided with an external thread fitting the internal thread, so that when the motor shaft 731 of the lock motor 73 rotates around the axis of the motor shaft 731, the transmission portion 721 can be driven to move in the axial direction of the motor shaft 731 of the lock motor 73.

It may be understood that the transmission portion 721 is disposed in the transmission hole 7311, so that a volume of the lock actuator 70 can be further reduced, thereby implementing miniaturization of the electro-mechanical braking apparatus 100 in this application.

It needs to be noted that, in embodiments of this application, only a possible embodiment of the transmission portion 721 is used as an example for description, but a manner of driving the transmission portion 721 to move in the axial direction of the gear shaft 28 in this application is not limited. In another embodiment of this application, the transmission portion 721 may be driven to move in the axial direction of the gear shaft 28 in another manner.

For example, in a possible embodiment, the transmission portion 721 includes a transmission screw and a threaded hole. The threaded hole runs through the transmission portion 721 along the motor shaft 731 of the lock motor 73. The transmission screw is sleeved on the motor shaft 731 of the lock motor 73 and is in fixed connection to the motor shaft 731 of the lock motor 73. The transmission portion 721 is sleeved on the transmission screw through the threaded hole. An external thread of the transmission screw is engaged with an internal thread of the threaded hole.

With cooperation between the screw and the threaded hole, a rotation action of the motor shaft 731 of the lock motor 73 can be reliably converted to a movement action of the transmission portion 721 in the axial direction of the motor shaft 731 of the lock motor 73.

The lock actuator 70 provided in embodiments of this application is located on a side of the reducer 20 in the axial direction of the gear shaft 28, and is in transmission connection to the gear shaft 28. The lock actuator 70 is configured to lock a motion state of the gear shaft 28.

When the lock actuator 70 works, the lock actuator 70 locks up the gear shaft 28, so that the gear shaft 28 cannot rotate around the axis of the gear shaft 28, to lock power transmission of the brake motor 10 in the reducer 20, that is, the brake motor 10 is locked-rotor. In this way, the electro-mechanical braking apparatus 100 in this application works in a parking brake mode, and can lock a working state of the brake 40.

When the lock actuator 70 does not work, the lock actuator 70 stops locking the gear shaft 28. In this case, the gear shaft 28 can rotate around the axis of the gear shaft 28. In other words, when the brake motor 10 works, the gear shaft 28 rotates around the axis of the gear shaft 28, so that the reducer 20 can transfer power inputted by the brake motor 10, and then the brake motor 10 can drive the brake 40 by using the reducer 20 to brake the vehicle 1000. In this case, the electro-mechanical braking apparatus 100 can work in a service brake mode.

It may be understood that the lock actuator 70 is in different working states to cooperate with the brake 40, so that the electro-mechanical braking apparatus 100 in this application can work in different brake modes, thereby improving effect of braking the vehicle 1000 by the electro-mechanical braking apparatus 100 in this application, and improving safety of the vehicle 1000.

For example, in a possible embodiment, when the electro-mechanical braking apparatus 100 works in the parking brake mode, the brake motor 10 runs and drives the brake 40 to brake the vehicle 1000, and after the wheel 1001 slows down to stop rotating, the lock actuator 70 locks the gear shaft 28 in the reducer 20. As the gear shaft 28 is locked by the lock actuator 70 and is in a lock-up state, the gear shaft 28 cannot continue to rotate around the axis of the gear shaft 28. In this case, the two friction linings 42 of the brake 40 always abut against and clamp the brake disc 43, to enable the brake 40 to continuously brake the vehicle 1000. This can avoid a dangerous case like slipping or other movement when the vehicle 1000 stops, thereby improving braking reliability and effectiveness of the electro-mechanical braking apparatus 100.

For example, in a possible embodiment, when the electro-mechanical braking apparatus 100 does not work in the parking brake mode, the lock actuator 70 stops locking the gear shaft 28. In this case, the gear shaft 28 can rotate around the axis of the gear shaft 28, so that the reducer 20 can implement power transmission of the brake motor 10.

For example, after the lock actuator 70 stops locking the gear shaft 28, the brake motor 10 may drive the brake 40 by using the reducer 20 to brake the vehicle 1000.

For example, after the lock actuator 70 stops locking the gear shaft 28, the brake motor 10 moves in a reverse direction and may drive, by using the reducer 20, the two friction linings 42 of the brake 40 to move away from each other, to release the brake disc 43, so that the vehicle 1000 can travel, that is, braking on the vehicle 1000 by the electro-mechanical braking apparatus 100 is released.

In an embodiment, the control circuit board 30 is further configured to fasten the control circuit of the lock motor 73, and the control circuit of the lock motor 73 is configured to output an alternating current to drive the motor shaft 731 of the lock motor 73 to rotate to drive the axial moving member 72 to move away from or move toward the clutch 71. The control circuit board 30 is configured to fasten the control circuits of both the lock motor 73 and the brake motor 10, thereby improving an integration level of the electro-mechanical braking apparatus 100 in this application and reducing a volume.

It is clear that a person skilled in the art can make various modifications and variations to this application without departing from the protection scope of this application. In this way, this application is intended to cover these modifications and variations of this application provided that they fall within the scope of the claims of this application and their equivalent technologies.

## Claims

1. A side-mounted electro-mechanical braking apparatus, wherein the electro-mechanical braking apparatus comprises a brake motor, a reducer, and a control circuit board, the control circuit board is configured to fasten a control circuit of the brake motor, the control circuit of the brake motor is configured to output an alternating current to drive the brake motor, the reducer comprises an input shaft and an output shaft that are arranged in parallel, the input shaft is configured to be in transmission connection to a motor shaft of the brake motor, and the output shaft is configured to drive a brake, wherein
in an axial direction of the brake motor, the input shaft is arranged between the motor shaft of the brake motor and the control circuit board, and the input shaft and the output shaft are arranged on a side that is of the control circuit board and that faces the brake motor; and
a thickness direction of the control circuit board is parallel to an axial direction of the input shaft, and a length direction of the control circuit board is parallel to an arrangement direction of the input shaft and the output shaft.

2. The electro-mechanical braking apparatus according to claim 1, wherein the electro-mechanical braking apparatus comprises a position sensor, the position sensor is configured to detect a rotation angle of the brake motor, the position sensor comprises a stator and a rotor, the control circuit board is configured to fasten the stator, and the input shaft is configured to be in coaxial transmission connection to the motor shaft and the rotor.

3. The electro-mechanical braking apparatus according to claim 1 or 2, wherein a gear set of the reducer comprises a motor gear and an output gear, the motor gear is coaxially fastened to the input shaft, the motor gear is in transmission connection to the output gear , the output gear is configured to drive the output shaft to rotate, and the motor gear and the output gear are arranged on a side that is of the control circuit board and that faces the brake motor.

4. The electro-mechanical braking apparatus according to claim 3, wherein the gear set of the reducer comprises a planetary input gear wheel, a planetary gear train, and a planetary output gear, the motor gear is configured to be in transmission connection to the planetary input gear , the planetary input gear is in transmission connection to the planetary output gear through the planetary gear train, and the planetary output gear is used as the output gear of the reducer to drive the output shaft to rotate, or is configured to drive the output shaft to rotate, wherein
the motor gear and the planetary input gear are spaced apart in the arrangement direction of the input shaft and the output shaft, and the planetary gear train is arranged between the planetary input gear and the planetary output gear in an axial direction of the output shaft.

5. The electro-mechanical braking apparatus according to any one of claims 1 to 4, wherein the electro-mechanical braking apparatus comprises a housing, the housing comprises a reducer accommodating cavity and a control circuit accommodating cavity, the reducer accommodating cavity is provided to accommodate the gear set of the reducer, the control circuit accommodating cavity is provided to accommodate the control circuit board, the housing comprises a separator plate and a cover plate, the control circuit board is arranged between the separator plate and the cover plate in the axial direction of the brake motor, and the separator plate is configured to separate the reducer accommodating cavity from the control circuit accommodating cavity.

6. The electro-mechanical braking apparatus according to claim 5, wherein at least one of the separator plate or the cover plate is configured to fasten the control circuit board, and the input shaft is configured to penetrate the separator plate and be in transmission connection to the rotor of the position sensor and the motor shaft of the brake motor.

7. The electro-mechanical braking apparatus according to any one of claims 1 to 6, wherein the motor shaft of the brake motor and the input shaft of the reducer are of an integrated structure, and the brake motor comprises a proximal shaft bearing and a distal shaft bearing, wherein
in the axial direction of the brake motor, the proximal shaft bearing and the distal shaft bearing are arranged on two sides of a motor rotor of the brake motor, and the distal shaft bearing and the control circuit board are arranged on two sides of the proximal shaft bearing.

8. The electro-mechanical braking apparatus according to any one of claims 1 to 7, wherein the electro-mechanical braking apparatus comprises the brake, the brake is configured to brake wheels of a vehicle, the brake comprises a reversing mechanism and at least one friction lining, the reversing mechanism and the motor shaft of the brake motor are arranged in parallel in the arrangement direction of the input shaft and the output shaft, and the reversing mechanism and the at least one friction lining are arranged on a side that is of the control circuit board and that faces the brake motor, wherein
the reversing mechanism is configured to rotate with the output shaft and drive the friction lining to move in the axial direction of the output shaft, and
the friction lining is configured to brake the wheels of the vehicle.

9. The electro-mechanical braking apparatus according to claim 8, wherein the reversing mechanism comprises a leadscrew and a ballscrew jacket, and the leadscrew and the motor shaft of the brake motor are arranged in parallel in the arrangement direction of the input shaft and the output shaft, wherein
the leadscrew is configured to be in transmission connection to the output shaft and drive the ballscrew jacket to move in an axial direction of the leadscrew; and
the ballscrew jacket is configured to drive the at least one friction lining to move in the axial direction of the brake motor.

10. The electro-mechanical braking apparatus according to claim 4, wherein the electro-mechanical braking apparatus comprises a lock actuator, the lock actuator is configured to lock or release a rotation action of the output gear , the lock actuator comprises a clutch and a lock motor, the lock motor is configured to control the clutch to perform locking or releasing, the control circuit board is configured to fasten a control circuit of the lock motor, and the control circuit of the lock motor is configured to output an alternating current to drive the lock motor, wherein
the lock motor is arranged between the control circuit board and the output gear in an axial direction of the lock motor.

11. The electro-mechanical braking apparatus according to claim 10, wherein the lock actuator comprises an axial moving member, and the lock motor is configured to drive the axial moving member to move away from or move toward the clutch to control the clutch to perform locking or releasing.

12. The electro-mechanical braking apparatus according to claim 11, wherein the clutch is configured to lock or release a rotation action of the planetary input gear, the clutch is accommodated in a shaft hole of a gear shaft of the planetary input gear, and the clutch comprises an inner gear and a movable member, wherein
the inner gear is coaxially fastened to the shaft hole of the gear shaft of the planetary input gear, a groove is provided on an outer circumferential surface of the inner gear, an opening of the groove faces an inner circumferential surface of the shaft hole of the gear shaft of the planetary input gear , and a groove depth of the groove gradually decreases in a circumferential direction of the shaft hole of the gear shaft of the planetary input gear ; and
the movable member is configured to move in the groove in the circumferential direction of the shaft hole of the gear shaft of the planetary input gear.

13. The electro-mechanical braking apparatus according to claim 12, wherein the inner gear comprises at least two grooves, a quantity of the movable members is the same as a quantity of the grooves, and each groove is provided to accommodate one movable member, wherein
the at least two grooves are provided at equal spacings in a circumferential direction of the inner gear, and a minimum groove depth end of one of two adjacent grooves is close to a maximum groove depth end of the other groove in the circumferential direction of the inner gear.

14. The electro-mechanical braking apparatus according to claim 12, wherein the clutch comprises an elastic member, and the elastic member is configured to cooperate with the axial moving member to drive the movable member to move back and forth in a circumferential direction of the inner gear, wherein
the axial moving member moves toward the clutch and drives the movable member to move clockwise in the circumferential direction of the inner gear, and when the axial moving member moves away from the clutch, the elastic member is configured to drive the movable member to move counterclockwise in the circumferential direction of the inner gear; or
the axial moving member moves toward the clutch and drives the movable member to move counterclockwise in the circumferential direction of the inner gear, and when the axial moving member moves away from the clutch, the elastic member is configured to drive the movable member to move clockwise in the circumferential direction of the inner gear.

15. A vehicle, comprising wheels and the electro-mechanical braking apparatus according to any one of claims 1 to 14, wherein the electro-mechanical braking apparatus is configured to brake the wheels, wherein
an axial direction of the brake motor, an axial direction of the input shaft, and an axial direction of the output shaft are parallel to axial directions of the wheels, and an arrangement direction of the input shaft and the output shaft is perpendicular to the axial directions of the wheels.
